(19) Europäisches Patentamt
European Patent Office
Office européen des brevets

(11) **EP 4 213 555 B1**

(12) **EUROPEAN PATENT SPECIFICATION**

(45) Date of publication and mention
of the grant of the patent:
**21.05.2025 Bulletin 2025/21**

(21) Application number: **20953737.2**

(22) Date of filing: **18.09.2020**

(51) International Patent Classification (IPC):
**H04W 72/04** (2023.01)    **H04W 72/23** (2023.01)

(52) Cooperative Patent Classification (CPC):
**H04L 1/0025; H04L 1/0003; H04L 5/0044;**
**H04L 1/0009; H04W 72/23**

(86) International application number:
**PCT/CN2020/116317**

(87) International publication number:
**WO 2022/056879 (24.03.2022 Gazette 2022/12)**

(54) **COMMUNICATION METHOD AND APPARATUS**

KOMMUNIKATIONSVERFAHREN UND -VORRICHTUNG

PROCÉDÉ ET APPAREIL DE COMMUNICATION

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**19.07.2023 Bulletin 2023/29**

(73) Proprietor: **Huawei Technologies Co., Ltd.**
**Shenzhen, Guangdong 518129 (CN)**

(72) Inventors:
• **LI, Ruijie**
  **Shenzhen, Guangdong 518129 (CN)**
• **GUAN, Lei**
  **Shenzhen, Guangdong 518129 (CN)**
• **LI, Shengyu**
  **Shenzhen, Guangdong 518129 (CN)**

(74) Representative: **Maiwald GmbH**
**Elisenhof**
**Elisenstraße 3**
**80335 München (DE)**

(56) References cited:
WO-A1-2018/228579    WO-A1-2019/157897
CN-A- 108 430 106    CN-A- 109 963 335
US-A1- 2020 127 788    US-A1- 2020 187 225

• **QUALCOMM INCORPORATED: "DL URLLC/ eMBB dynamic multiplexing and indication design", 3GPP DRAFT; R1-1702639 DL URLLCEMBB DYNAMIC MULTIPLEXING AND INDICATION DESIGN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Athens, Greece; 20170213 - 20170217, 12 February 2017 (2017-02-12), Mobile Competence Centre ; 650, route des Lucioles ; F-06921 Sophia-Antipolis Cedex ; France , XP051209790**

## Description

## TECHNICAL FIELD

This application relates to the field of communication technologies, and in particular, to a communication method and apparatus.

## BACKGROUND

Compared with previous generations of mobile communication systems, a 5th generation (5th generation, 5G) system imposes higher requirements on a transmission rate, latency, and power consumption, and is dedicated to supporting higher system performance, a plurality of service types, different deployment scenarios, and a wider spectral range.

In the 5G system, for two data streams that have different services or two data streams that have a same service but have different reliability requirements, modulation and coding are performed on the two data streams based on a reliability requirement of one of the data streams. Because the reliability requirements are different, when reliability of one data stream is met, a resource waste may be caused or reliability of one of the data streams cannot be met. For example, a reliability requirement of a first data stream is 99%, and a reliability requirement of a second data stream is 99.999%. In this case, if meeting reliability of the second data stream is used as a resource allocation target, more resources need to be allocated to transmit the first data stream and the second data stream. In this case, because the reliability requirement of the first data stream is lower than the reliability requirement of the second data stream, a resource waste is caused. If meeting the reliability requirement of the first data stream is used as the resource allocation target, fewer resources are allocated to transmit the first data stream and the second data stream. In this case, the reliability requirement of the second data stream cannot be met. The US 2020 / 187 225 A1 refers to a data transmission method and an apparatus and an electronic device.

Document US 2020/127788 A1 discloses a UE that transmits a first bit block in a first time-frequency resource group and transmits a second bit block in a second time-frequency resource group.

Document WO 2019/157897 A1 discloses a network device sending the indication information to a terminal device, the indication information is used to indicate the first resource, for example, the indication information includes location information of the first resource, and the location information of the first resource indicates a frequency domain location and a time domain location of the first resource.

## SUMMARY

Embodiments of this application provide a communication method and apparatus, to avoid a resource waste when meeting reliability of two data streams.

To achieve the foregoing objective, embodiments of this application provide the following technical solutions.

According to a first aspect, a communication method is provided. A terminal receives first indication information that is from a network device and that indicates a time-frequency resource and an MCS of first data, where the time-frequency resource includes a first time-frequency resource and a second time-frequency resource, the first time-frequency resource is a time-frequency resource carrying the first data, and the second time-frequency resource is a time-frequency resource carrying second data; the terminal determines the first time-frequency resource, the second time-frequency resource, and an MCS of the second data, where at least one of the first time-frequency resource, the second time-frequency resource, or the MCS of the second data is determined based on the first indication information; and the terminal sends the first data to the network device on the first time-frequency resource based on the MCS of the first data, and sends the second data to the network device on the second time-frequency resource based on the MCS of the second data; or the terminal receives the first data from the network device on the first time-frequency resource based on the MCS of the first data, and receives the second data from the network device on the second time-frequency resource based on the MCS of the second data. In the method provided in the first aspect, if there are two pieces of data, the terminal may determine time-frequency resources and MCSs of the two pieces of data, to meet reliability requirements of different pieces of data and flexibly perform data transmission. Compared with performing modulation and coding on the two pieces of data based on a reliability requirement of one piece of the data (that is, joint coding is used for the two pieces of data, for example, a same MCS is used for the two pieces of data), respective MCSs are used for the two pieces of data, which can avoid a resource waste when meeting reliability of the two pieces of data. In addition, if at least one of the first time-frequency resource, the second time-frequency resource, or the MCS of the second data is determined based on the first indication information, overheads of signaling can be reduced compared with that when the first time-frequency resource, the second time-frequency resource, and the MCS of the second data are all indicated by using the indication information.

In a possible implementation, the first data and the second data are transmitted in a same physical channel.

In a possible implementation, the terminal determines a size of the first data, and determines the first time-frequency resource based on the size of the first data and the MCS of the first data; or the terminal determines the first time-frequency resource based on the time-frequency resource and a relationship between the first time-frequency resource and the time-frequency resource; or the terminal receives second indication information, and determines the first time-frequency resource based on the second indication information; or the terminal determines the first time-frequency resource based on the time-frequency resource and the second time-frequency resource. In this possible implementation, a plurality of methods for determining the first time-frequency resource are provided, so that the first time-frequency resource can be determined in different cases, thereby improving flexibility of determining the first time-frequency resource.

In a possible implementation, there is a preset proportional relationship between the first time-frequency resource and the time-frequency resource; or there is a preset correspondence between the first time-frequency resource and the time-frequency resource.

In a possible implementation, the terminal receives fifth indication information from the network device, and determines the size of the first data based on the fifth indication information.

In a possible implementation, the terminal determines the second time-frequency resource based on the time-frequency resource and a relationship between the second time-frequency resource and the time-frequency resource; or the terminal receives third indication information, and determines the second time-frequency resource based on the third indication information; or the terminal determines the second time-frequency resource based on the time-frequency resource and the first time-frequency resource; or the terminal determines a size of the second data, and determines the second time-frequency resource based on the MCS of the second data and the size of the second data. In this possible implementation, a plurality of methods for determining the second time-frequency resource are provided, so that the second time-frequency resource can be determined in different cases, thereby improving flexibility of determining the second time-frequency resource.

In a possible implementation, there is a preset proportional relationship between the second time-frequency resource and the time-frequency resource; or there is a preset correspondence between the second time-frequency resource and the time-frequency resource. In a possible implementation, the terminal receives sixth indication information from the network device, and determines the size of the second data based on the sixth indication information.

In a possible implementation, the terminal determines the MCS of the second data based on the MCS of the first data and a relationship between the MCS of the first data and the MCS of the second data; or the terminal receives fourth indication information, and determines the MCS of the second data based on the fourth indication information; or the terminal determines the size of the second data, and determines the MCS of the second data based on the size of the second data and the second time-frequency resource. In this possible implementation, a plurality of methods for determining the MCS of the second data are provided, so that the MCS of the second data can be determined in different cases, thereby improving flexibility of determining the MCS of the second data.

In a possible implementation, there is a preset index relationship between the MCS of the first data and the MCS of the second data; or a modulation manner in the MCS of the first data is the same as a modulation manner in the MCS of the second data, and there is a preset proportional relationship between a code rate in the MCS of the first data and a code rate in the MCS of the second data.

In a possible implementation, the terminal sends or receives the first data on the first time-frequency resource based on the MCS of the first data; and the terminal sends or receives the second data on the second time-frequency resource based on the MCS of the second data.

According to a second aspect, a communication method is provided. A network device sends first indication information indicating a time-frequency resource and an MCS of first data to a terminal, where the time-frequency resource includes a first time-frequency resource and a second time-frequency resource, the first time-frequency resource is a time-frequency resource carrying the first data, and the second time-frequency resource is a time-frequency resource carrying second data; the network device receives or sends the first data based on the first time-frequency resource and the MCS of the first data; and the network device receives or sends the second data based on the second time-frequency resource and an MCS of the second data.

In a possible implementation, the first data and the second data are transmitted in a same physical channel.

In a possible implementation, the network device sends second indication information to the terminal, where the second indication information indicates the first time-frequency resource.

In a possible implementation, the network device sends third indication information to the terminal, where the third indication information indicates the second time-frequency resource.

In a possible implementation, the network device sends fourth indication information to the terminal, where the fourth indication information indicates the MCS of the second data.

In a possible implementation, the network device sends fifth indication information to the terminal, where the fifth indication information indicates a size of the first data.

In a possible implementation, the network device sends sixth indication information to the terminal, where the sixth indication information indicates a size of the second data.

In a possible implementation, the network device sends indication information to the terminal, where the indication information indicates at least one of the first time-frequency resource, the second time-frequency resource, or the MCS of the second data.

According to a third aspect, a communication method is provided. A terminal receives eighth indication information from a network device, where the eighth indication information indicates a first time-frequency resource and an MCS of first data, and the first time-frequency resource is a time-frequency resource carrying the first data; the terminal determines a second time-frequency resource and an MCS of second data, where at least one of the second time-frequency resource or the MCS of the second data is determined based on the eighth indication information, and the second time-frequency resource is a time-frequency resource carrying the second data; and the terminal sends the first data to the network device on the first time-frequency resource based on the MCS of the first data, and sends the second data to the network device on the second time-frequency resource based on the MCS of the second data; or the terminal receives the first data from the network device on the first time-frequency resource based on the MCS of the first data, and receives the second data from the network device on the second time-frequency resource based on the MCS of the second data. For beneficial effects of the method provided in the third aspect, reference may be made to related descriptions of beneficial effects of the first aspect.

In a possible implementation, the first data and the second data are transmitted in a same physical channel.

In a possible implementation, the terminal receives third indication information, and determines the second time-frequency resource based on the third indication information; and the terminal determines the MCS of the second data based on the MCS of the first data and a relationship between the MCS of the first data and the MCS of the second data.

In a possible implementation, the terminal receives fourth indication information, and determines the MCS of the second data based on the fourth indication information; and the terminal determines the second time-frequency resource based on the first time-frequency resource and a relationship between the first time-frequency resource and the second time-frequency resource.

In a possible implementation, the terminal determines the second time-frequency resource based on the first time-frequency resource and the relationship between the first time-frequency resource and the second time-frequency resource; and the terminal determines the MCS of the second data based on the MCS of the first data and the relationship between the MCS of the first data and the MCS of the second data.

In the foregoing plurality of implementations, a plurality of methods for determining the second time-frequency resource and the MCS of the second data are provided, so that the second time-frequency resource and the MCS of the second data can be determined in different cases, thereby improving flexibility of determining the second time-frequency resource and the MCS of the second data.

According to a fourth aspect, a communication method is provided. A network device sends eighth indication information to a terminal, where the eighth indication information indicates a first time-frequency resource and an MCS of first data, the first time-frequency resource is a time-frequency resource carrying the first data, the eighth indication information is further used by the terminal to determine at least one of a second time-frequency resource or an MCS of second data, and the second time-frequency resource is a time-frequency resource carrying the second data; and the network device sends the first data to the terminal on the first time-frequency resource based on the MCS of the first data, and sends the second data to the terminal on the second time-frequency resource based on the MCS of the second data; or the network device receives the first data from the terminal on the first time-frequency resource based on the MCS of the first data, and receives the second data from the terminal on the second time-frequency resource based on the MCS of the second data.

In a possible implementation, the first data and the second data are transmitted in a same physical channel.

In a possible implementation, the network device sends third indication information to the terminal, where the third indication information indicates the second time-frequency resource.

In a possible implementation, the network device sends fourth indication information to the terminal, where the fourth indication information indicates the MCS of the second data.

In a possible implementation, there is a relationship between the first time-frequency resource and the second time-frequency resource, and there is a relationship between the MCS of the first data and the MCS of the second data.

According to a fifth aspect, a communication method is provided. A terminal receives eleventh indication information and twelfth indication information from a network device, where the eleventh indication information indicates a first resource and a third MCS, the twelfth indication information indicates a second resource and a fourth MCS, the third MCS is an MCS for sending or receiving first data on the first resource, and the fourth MCS is an MCS for sending or receiving second data on the second resource; and if the first resource and the second resource overlap, the terminal sends the first data to the network device on a first time-frequency resource based on a first MCS, and sends the second data to the network device on a second time-frequency resource based on a second MCS; or the terminal receives the first data from the network device on the first time-frequency resource based on the first MCS, and receives the second data from the network device on the second time-frequency resource based on the second MCS, where the first MCS is an MCS

4

for sending or receiving the first data on the first time-frequency resource, and the second MCS is an MCS for sending or receiving the second data on the second time-frequency resource; and the first resource includes the first time-frequency resource and the second time-frequency resource, or the second resource includes the first time-frequency resource and the second time-frequency resource.

In a possible implementation, the terminal receives tenth indication information from the network device, where the tenth indication information indicates the first time-frequency resource or the first MCS; if the tenth indication information indicates the first time-frequency resource, the terminal determines the first time-frequency resource based on the tenth indication information, and determines the first MCS, the second time-frequency resource, and the second MCS based on the first time-frequency resource, the eleventh indication information, and the twelfth indication information; and if the tenth indication information indicates the first MCS, the terminal determines the first MCS based on the tenth indication information, and determines the first time-frequency resource, the second time-frequency resource, and the second MCS based on the first MCS, the eleventh indication information, and the twelfth indication information.

In a possible implementation, if the tenth indication information is for determining the first time-frequency resource, the terminal determines the first MCS based on the first time-frequency resource and a size of the first data; the terminal determines the second time-frequency resource based on the first time-frequency resource and the first resource or the second resource; and the terminal determines the second MCS based on the second time-frequency resource and a size of the second data, where the size of the first data is determined based on the eleventh indication information, and the size of the second data is determined based on the twelfth indication information.

In a possible implementation, if the tenth indication information is for determining the first MCS, the terminal determines the first time-frequency resource based on the first MCS and a size of the first data; the terminal determines the second time-frequency resource based on the first time-frequency resource and the first resource or the second resource; and the terminal determines the second MCS based on the second time-frequency resource and a size of the second data, where the size of the first data is determined based on the eleventh indication information, and the size of the second data is determined based on the twelfth indication information.

In a possible implementation, the first resource includes the first time-frequency resource and the second time-frequency resource, the terminal determines the second time-frequency resource based on the second resource, the terminal determines the first time-frequency resource based on the first resource and the second time-frequency resource, the second MCS is the fourth MCS, and the first MCS is the third MCS or the first MCS is determined based on the first time-frequency resource and the size of the first data.

In a possible implementation, the terminal determines X1 REs in the first resource as the second time-frequency resource, where X1 is a quantity of REs for data transmission in the second resource.

In a possible implementation, the second resource includes the first time-frequency resource and the second time-frequency resource, the terminal determines the first time-frequency resource based on the first resource, the terminal determines the second time-frequency resource based on the second resource and the first time-frequency resource, the first MCS is the third MCS, and the second MCS is the fourth MCS or the second MCS is determined based on the second time-frequency resource and the size of the second data.

In a possible implementation, the terminal determines X2 REs in the second resource as the first time-frequency resource, where X2 is a quantity of REs for data transmission in the first resource.

In a possible implementation, the first data and the second data are transmitted in a same physical channel.

According to a sixth aspect, a communication method is provided. A network device sends eleventh indication information and twelfth indication information to a terminal, where the eleventh indication information indicates a first resource and a third MCS, the twelfth indication information indicates a second resource and a fourth MCS, the third MCS is an MCS for sending or receiving first data on the first resource, and the fourth MCS is an MCS for sending or receiving second data on the second resource; if the first resource and the second resource overlap, the eleventh indication information and the twelfth indication information are for determining at least one of a first time-frequency resource, a first MCS, a second time-frequency resource, or a second MCS, where the first MCS is an MCS for sending or receiving the first data on the first time-frequency resource, and the second MCS is an MCS for sending or receiving the second data on the second time-frequency resource; and the first resource includes the first time-frequency resource and the second time-frequency resource, or the second resource includes the first time-frequency resource and the second time-frequency resource; and if the first resource and the second resource overlap, the network device sends the first data to the terminal on the first time-frequency resource based on the first MCS, and sends the second data to the terminal on the second time-frequency resource based on the second MCS; or the network device receives the first data from the terminal on the first time-frequency resource based on the first MCS, and receives the second data from the terminal on the second time-frequency resource based on the second MCS.

In a possible implementation, the network device sends tenth indication information to the terminal, where the tenth indication information indicates the first time-frequency resource or the first MCS.

In a possible implementation, the first resource includes the first time-frequency resource and the second time-frequency resource, the second time-frequency resource is determined based on the second resource, the first time-frequency resource is determined based on the first resource and the second time-frequency resource, the second MCS is the fourth MCS, and the first MCS is the third MCS or the first MCS is determined based on the first time-frequency resource and a size of the first data.

In a possible implementation, X1 REs in the first resource are the second time-frequency resource, where X1 is a quantity of REs for data transmission in the second resource.

In a possible implementation, the second resource includes the first time-frequency resource and the second time-frequency resource, the first time-frequency resource is determined based on the first resource, the second time-frequency resource is determined based on the second resource and the first time-frequency resource, the first MCS is the third MCS, and the second MCS is the fourth MCS or the second MCS is determined based on the second time-frequency resource and a size of the second data.

In a possible implementation, X2 REs in the second resource are the first time-frequency resource, where X2 is a quantity of REs for data transmission in the first resource.

In a possible implementation, the first data and the second data are transmitted in a same physical channel.

According to a seventh aspect, a communication apparatus is provided, including a communication unit and a processing unit. The communication unit is configured to receive first indication information from a network device, where the first indication information indicates a time-frequency resource and an MCS of first data, the time-frequency resource includes a first time-frequency resource and a second time-frequency resource, the first time-frequency resource is a time-frequency resource carrying the first data, and the second time-frequency resource is a time-frequency resource carrying second data; the processing unit is configured to determine the first time-frequency resource, the second time-frequency resource, and an MCS of the second data, where at least one of the first time-frequency resource, the second time-frequency resource, or the MCS of the second data is determined based on the first indication information; and the communication unit is further configured to: send the first data to the network device on the first time-frequency resource based on the MCS of the first data, and send the second data to the network device on the second time-frequency resource based on the MCS of the second data; or receive the first data from the network device on the first time-frequency resource based on the MCS of the first data, and receive the second data from the network device on the second time-frequency resource based on the MCS of the second data.

In a possible implementation, the first data and the second data are transmitted in a same physical channel.

In a possible implementation, the processing unit is specifically configured to: determine a size of the first data, and determine the first time-frequency resource based on the size of the first data and the MCS of the first data; or determine the first time-frequency resource based on the time-frequency resource and a relationship between the first time-frequency resource and the time-frequency resource; or receive second indication information by using the communication unit, and determine the first time-frequency resource based on the second indication information; or determine the first time-frequency resource based on the time-frequency resource and the second time-frequency resource.

In a possible implementation, the communication unit is further configured to receive fifth indication information from the network device; and the processing unit is further configured to determine the size of the first data based on the fifth indication information.

In a possible implementation, the processing unit is specifically configured to: determine the second time-frequency resource based on the time-frequency resource and a relationship between the second time-frequency resource and the time-frequency resource; or receive third indication information by using the communication unit, and determine the second time-frequency resource based on the third indication information; or determine the second time-frequency resource based on the time-frequency resource and the first time-frequency resource; or determine a size of the second data, and determine the second time-frequency resource based on the MCS of the second data and the size of the second data.

In a possible implementation, the communication unit is further configured to receive sixth indication information from the network device; and the processing unit is further configured to determine the size of second data based on the sixth indication information.

In a possible implementation, the processing unit is specifically configured to: determine the MCS of the second data based on the MCS of the first data and a relationship between the MCS of the first data and the MCS of the second data; or receive fourth indication information by using the communication unit, and determine the MCS of the second data based on the fourth indication information; or determine the size of the second data, and determine the MCS of the second data based on the size of the second data and the second time-frequency resource.

According to an eighth aspect, a communication apparatus is provided, including a communication unit and a processing unit. The processing unit is configured to send first indication information to a terminal by using the communication unit, where the first indication information indicates a time-frequency resource and an MCS of first data, the time-frequency resource includes a first time-frequency resource and a second time-frequency resource, the first time-frequency resource is a time-frequency resource carrying the first data, and the second time-frequency resource is a time-frequency resource carrying second data; and the communication unit is further configured to: send the first data to the terminal on the first time-frequency resource based on the MCS of the first data, and send the second data to the terminal on the second time-frequency resource based on an MCS of the second data; or receive the first data from the terminal on the first time-frequency resource based on the MCS of the first data, and receive the second data from the terminal on the second time-frequency resource based on the MCS of the second data.

In a possible implementation, the first data and the second data are transmitted in a same physical channel.

In a possible implementation, the processing unit is further configured to send second indication information to the terminal by using the communication unit, where the second indication information indicates the first time-frequency resource.

In a possible implementation, the processing unit is further configured to send third indication information to the terminal by using the communication unit, where the third indication information indicates the second time-frequency resource.

In a possible implementation, the processing unit is further configured to send fourth indication information to the terminal by using the communication unit, where the fourth indication information indicates the MCS of the second data.

In a possible implementation, the processing unit is further configured to send fifth indication information to the terminal by using the communication unit, where the fifth indication information indicates a size of the first data.

In a possible implementation, the processing unit is further configured to send sixth indication information to the terminal by using the communication unit, where the sixth indication information indicates a size of the second data.

According to a ninth aspect, a communication apparatus is provided, including a communication unit and a processing unit. The communication unit is configured to receive eighth indication information from a network device, where the eighth indication information indicates a first time-frequency resource and an MCS of first data, and the first time-frequency resource is a time-frequency resource carrying the first data; the processing unit is configured to determine a second time-frequency resource and an MCS of second data, where at least one of the second time-frequency resource or the MCS of the second data is determined based on the eighth indication information, and the second time-frequency resource is a time-frequency resource carrying the second data; and the communication unit is further configured to: send the first data to the network device on the first time-frequency resource based on the MCS of the first data, and send the second data to the network device on the second time-frequency resource based on the MCS of the second data; or receive the first data from the network device on the first time-frequency resource based on the MCS of the first data, and receive the second data from the network device on the second time-frequency resource based on the MCS of the second data.

In a possible implementation, the first data and the second data are transmitted in a same physical channel.

In a possible implementation, the processing unit is specifically configured to: receive third indication information by using the communication unit, and determine the second time-frequency resource based on the third indication information; and determine the MCS of the second data based on the MCS of the first data and a relationship between the MCS of the first data and the MCS of the second data.

In a possible implementation, the processing unit is specifically configured to: receive fourth indication information by using the communication unit, and determine the MCS of the second data based on the fourth indication information; and determine the second time-frequency resource based on the first time-frequency resource and a relationship between the first time-frequency resource and the second time-frequency resource.

In a possible implementation, the processing unit is specifically configured to: determine the second time-frequency resource based on the first time-frequency resource and the relationship between the first time-frequency resource and the second time-frequency resource; and determine the MCS of the second data based on the MCS of the first data and the relationship between the MCS of the first data and the MCS of the second data.

According to a tenth aspect, a communication apparatus is provided, including a communication unit and a processing unit. The processing unit is configured to send eighth indication information to a terminal by using the communication unit, where the eighth indication information indicates a first time-frequency resource and an MCS of first data, the first time-frequency resource is a time-frequency resource carrying the first data, the eighth indication information is further used by the terminal to determine at least one of a second time-frequency resource or an MCS of second data, and the second time-frequency resource is a time-frequency resource carrying the second data; and the communication unit is further configured to: send the first data to the terminal on the first time-frequency resource based on the MCS of the first data, and send the second data to the terminal on the second time-frequency resource based on the MCS of the second data; or receive the first data from the terminal on the first time-frequency resource based on the MCS of the first data, and receive the second data from the terminal on the second time-frequency resource based on the MCS of the second data.

In a possible implementation, the first data and the second data are transmitted in a same physical channel.

In a possible implementation, the processing unit is further configured to send third indication information to the terminal by using the communication unit, where the third indication information indicates the second time-frequency resource.

In a possible implementation, the processing unit is further configured to send fourth indication information to the terminal by using the communication unit, where the fourth indication information indicates the MCS of the second data.

In a possible implementation, there is a relationship between the first time-frequency resource and the second time-frequency resource, and there is a relationship between the MCS of the first data and the MCS of the second data.

According to an eleventh aspect, a communication apparatus is provided, including one or more functional units, where the one or more functional units are configured to implement any method provided in the fifth aspect, for example, including a communication unit and a processing unit. The processing unit is configured to perform a sending and/or receiving action in any method provided in the fifth aspect by using the communication unit, and the processing unit is further configured to perform other actions in any method provided in the fifth aspect.

According to a twelfth aspect, a communication apparatus is provided, including one or more functional units, where the one or more functional units are configured to implement any method provided in the sixth aspect, for example, including a communication unit and a processing unit. The processing unit is configured to perform a sending and/or receiving action in any method provided in the sixth aspect by using the communication unit, and the processing unit is further configured to perform other actions in any method provided in the sixth aspect.

According to a thirteenth aspect, a communication apparatus is provided, including one or more processors and a transceiver. The one or more processors and the transceiver support the communication apparatus in performing any method provided in any one of the first aspect to the sixth aspect.

According to a fourteenth aspect, a communication apparatus is provided, including a processor and a communication interface. The processor is coupled to a memory through the communication interface, and when the processor executes a computer program or computer instructions in the memory, any method provided in any one of the first aspect to the sixth aspect is performed.

According to a fifteenth aspect, a computer-readable storage medium is provided, including computer instructions. When the computer instructions run on a communication apparatus, the communication apparatus is enabled to perform any method provided in any one of the first aspect to the sixth aspect.

According to a sixteenth aspect, a computer program product is provided, including computer instructions. When the computer instructions run on a communication apparatus, the communication apparatus is enabled to perform any method provided in any one of the first aspect to the sixth aspect.

According to a seventeenth aspect, a communication system is provided, including the foregoing network device and the foregoing terminal.

For a technical effect brought by any implementation in the seventh aspect to the seventeenth aspect, reference may be made to a technical effect brought by a corresponding implementation in the first aspect to the sixth aspect. Details are not described herein again.

It should be noted that the solutions in the foregoing aspects may be combined on the premise that the solutions are not contradictory.

## BRIEF DESCRIPTION OF DRAWINGS

FIG. 1 is a schematic diagram of communication between a terminal and a network device;
FIG. 2 is a flowchart of uplink and downlink data transmission;
FIG. 3 is a schematic diagram of PDSCH resources;
FIG. 4 is a schematic diagram of an RBG;
FIG. 5 is a schematic diagram of frequency-domain resources occupied by a PDSCH;
FIG. 6 is a schematic diagram of mapping a codeword to a layer;
FIG. 7 is a flowchart of a communication method according to an embodiment of this application;
FIG. 8 is a schematic diagram of positions of a first time-frequency resource and a second time-frequency resource according to an embodiment of this application;
FIG. 9 is still another schematic diagram of positions of a first time-frequency resource and a second time-frequency resource according to an embodiment of this application;
FIG. 10 is still another schematic diagram of positions of a first time-frequency resource and a second time-frequency resource according to an embodiment of this application;
FIG. 11 is a flowchart of still another communication method according to an embodiment of this application;
FIG. 12 is a schematic diagram of positions of a first time-domain resource and a second time-domain resource according to an embodiment of this application;
FIG. 13 is a schematic diagram of positions of a first frequency-domain resource and a second frequency-domain resource according to an embodiment of this application;
FIG. 14 is a flowchart of still another communication method according to an embodiment of this application;
FIG. 15 is a flowchart of still another communication method according to an embodiment of this application;

FIG. 16 is a schematic diagram in which resources scheduled by a network device overlap according to an embodiment of this application;

FIG. 17 is a schematic composition diagram of a communication apparatus according to an embodiment of this application;

FIG. 18 is a schematic diagram of a hardware structure of a communication apparatus according to an embodiment of this application; and

FIG. 19 is a schematic diagram of a hardware structure of still another communication apparatus according to an embodiment of this application.

## DESCRIPTION OF EMBODIMENTS

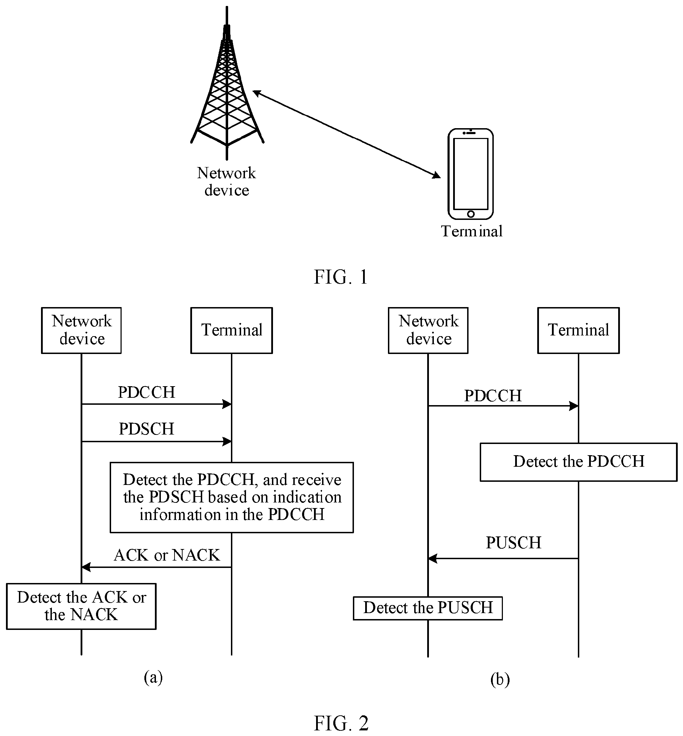

Network elements in embodiments of this application include a network device and a terminal in a communication system. For details, reference may be made to FIG. 1.

Based on a communication scenario shown in FIG. 1, for downlink data transmission, refer to (a) in FIG. 2. The network device sends a physical downlink control channel (physical downlink control channel, PDCCH) and a physical downlink shared channel (physical downlink shared channel, PDSCH). The terminal first detects the PDCCH, and receives the PDSCH based on indication information in the PDCCH. After receiving the PDSCH, the terminal decodes the PDSCH. If the PDSCH is successfully decoded, the terminal sends an acknowledgment (acknowledgement, ACK) to the network device. If the PDSCH fails to be decoded, the terminal sends a negative acknowledgment (negative acknowledgement, NACK) to the network device. The network device detects the ACK or the NACK on a corresponding resource.

Based on the communication scenario shown in FIG. 1, for uplink data transmission, refer to (b) in FIG. 2. The network device sends a PDCCH. The terminal first detects the PDCCH, and then sends a physical uplink shared channel (physical uplink shared channel, PUSCH) based on indication information in the PDCCH. The network device detects the PUSCH on a corresponding resource.

It may be understood that, in embodiments of this application, the PDSCH, the PDCCH, and the PUSCH are only used as examples of a downlink data channel, a downlink control channel, and an uplink data channel of a physical layer. In different systems and different scenarios, a data channel and a control channel may have different names. This is not limited in embodiments of this application.

A communication system in embodiments of this application may be a 4th generation (4th Generation, 4G) system, various systems evolved based on the 4G system, a 5G system, various systems evolved based on the 5G system, or a future mobile communication system. A core network of the 4G system may be referred to as an evolved packet core (evolved packet core, EPC) system, and an access network may be referred to as a long term evolution (long term evolution, LTE) system. A core network of the 5G system may be referred to as a 5GC (5G core) system, and an access network may be referred to as a new radio (new radio, NR) system.

For example, this application may be applied to service scenarios such as enhanced mobile broadband (enhanced mobile broadband, eMBB), massive machine type communication (massive machine type communication, mMTC), and ultra-reliable and low-latency communications (ultra-reliable and low-latency communications, URLLC).

The network device in embodiments of this application is an entity that is on a network side and that is configured to send a signal and receive a signal. The network device may be an apparatus that is deployed in a radio access network (radio access network, RAN) and that provides a wireless communication function for the terminal. For example, the network device may be a transmission reception point (transmission reception point, TRP), a base station, a control node in any form, a road side unit (road side unit, RSU), or the like. The base station may be a macro base station, a micro base station (also referred to as a small cell), a relay station, an access point (access point, AP), or the like in various forms. For example, the base station may be an evolved NodeB (evolved NodeB, eNB or eNodeB), a next generation node base station (next generation node base station, gNB), a next generation eNB (next generation eNB, ng-eNB), a relay node (relay node, RN), an integrated access and backhaul (integrated access and backhaul, IAB) node, or the like. In systems using different radio access technologies (radio access technology, RAT), names of devices having a base station function may be different. For example, the base station may be referred to as an eNB or an eNodeB in an LTE system, and may be referred to as a gNB in a 5G system or an NR system. A specific name of the base station is not limited in this application. The control node may be connected to a plurality of base stations, and configure resources for a plurality of terminals covered by the plurality of base stations.

The terminal in embodiments of this application may be an entity that is on a user side and that is configured to receive a signal and send a signal. The terminal is configured to provide users with one or more of a voice service and a data connectivity service. The terminal may also be referred to as user equipment (user equipment, UE), a terminal device, a user unit, a user station, a mobile station, a mobile terminal, a remote station, a remote terminal, a mobile device, or a user terminal. The terminal may be a vehicle to everything (vehicle to everything, V2X) device, for example, an intelligent vehicle, a digital vehicle, or an unmanned vehicle. The terminal may also be a device to device (device to device, D2D) device. The terminal may be a mobile phone, a tablet computer, a computer having a wireless transceiver function, a virtual reality terminal device, an augmented reality terminal device, a wireless terminal in industrial control, a wireless terminal in self-driving, a wireless terminal in remote surgery, a wireless terminal in a smart grid, a wireless terminal in transportation safety, a wireless terminal in a smart city, a wireless terminal in a smart home, or the like. A specific technology and a specific device form that are used by the terminal device are not limited in embodiments of this application.

To make embodiments of this application clearer, the following briefly describes some content in embodiments of this application.

1. Resource allocation for uplink and downlink data.

Resource allocation for uplink data includes two manners: configured grant (configured grant, CG) and dynamic grant (dynamic grant, DG). Resource allocation for downlink data includes two manners: semi-persistent scheduling (semi-persistent scheduling, SPS) and DG.

CG resources are allocated in the manner of semi-persistent scheduling. After a network device allocates resources to a terminal, the terminal may use the allocated resources within a future period of time, which is characterized by "one-time allocation, multiple-time use". Specifically, the network device may configure, for the terminal, a time-domain resource that periodically appears. The CG resources may include a type1 (type1) CG (configured grant type-1) resource and a type2 (type2) CG (configured grant type-2) resource. The type1 CG resource is a transmission resource directly configured by the network device for the terminal by using radio resource control (radio resource control, RRC) signaling, and the terminal may directly use the CG resource to transmit data. The type2 CG resource is a periodicity for which the network device configures the transmission resource by using the RRC signaling, and then the transmission resource is activated by using downlink control information (downlink control information, DCI) in a PDCCH.

DG resources are transmission resources dynamically allocated by the network device to the terminal by using the DCI in the PDCCH.

2. Indication mechanism of time-frequency resources of a PDSCH.

First part: indication of time-domain resources of the PDSCH.

The time-domain resources of the PDSCH are determined by using time-domain resource information, and the time-domain resource information includes a PDSCH mapping type (PDSCH mapping type), $K_0$, S, and L. $K_0$ represents a slot (slot) interval between the PDSCH and a PDCCH corresponding to the PDSCH, and S and L respectively represent a start position (for example, a start symbol) and a length of the PDSCH in a slot indicated by $K_0$.

Currently, a row in a table preconfigured for high layers is selected as the time-domain resources of the PDSCH by using a time-domain resource indicator field (4 bits) in the PDCCH. An example in which the table preconfigured for the high layers is Table 1 is used. For example, when a row index (row index) indicated by the time-domain resource indicator field in the PDCCH is 1 and demodulation reference signal (demodulation reference signal, DMRS)-typeA-position (DMRS-TypeA-Position) is 2, the PDSCH mapping type is typeA, $K_0$=0, S=2, and L=12.

**Table 1**

| Row index | DMRS-typeA-position | PDSCH mapping type | $K_0$ | S | L |
|---|---|---|---|---|---|
| 1 | 2 | TypeA | 0 | 2 | 12 |
|  | 3 | TypeA | 0 | 3 | 11 |
| 2 | 2 | TypeA | 0 | 2 | 10 |
|  | 3 | TypeA | 0 | 3 | 9 |
| ... | ... | ... | ... | ... | ... |

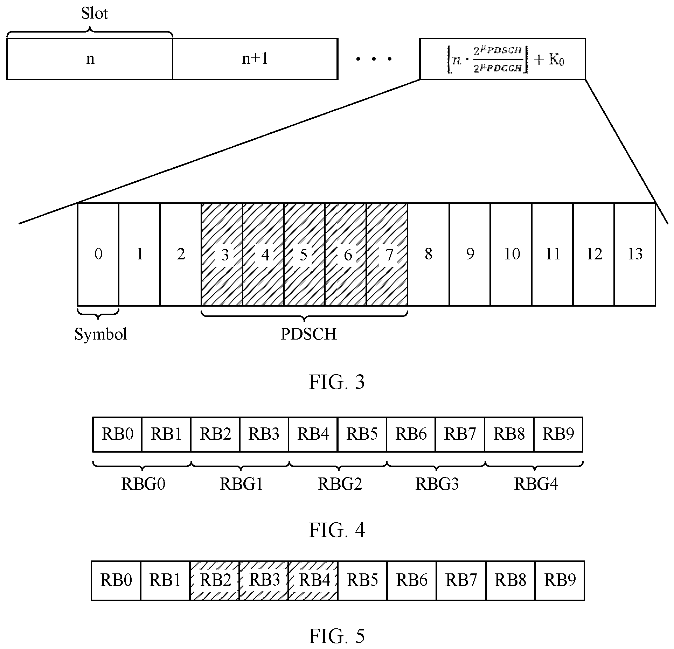

For example, refer to FIG. 3. If a PDCCH to which downlink control information (downlink control information, DCI) for scheduling a PDSCH belongs is sent in a slot n, S=3, and L=5, the PDSCH is located in a symbol 3 to a symbol 7 in a slot ($\left\lfloor n \cdot \frac{2^{\mu_{PDSCH}}}{2^{\mu_{PDCCH}}} \right\rfloor + K_0$). $\mu_{PDSCH}$ and $\mu_{PDCCH}$ may be determined based on a subcarrier spacing. "$\lfloor \rfloor$" is a rounding down symbol.

Second part: indication of frequency-domain resources of the PDSCH.

The frequency-domain resources of the PDSCH are indicated by using a frequency-domain resource indicator field in the PDCCH. There are two indication methods for the frequency-domain resources.

A first indication manner is type0 (type0). Frequency-domain granularities of the indication method are resource block groups (resource block groups, RBGs). By using an example in which a bandwidth is 10 resource blocks (resource block, RB) and a size of an RBG (that is, a quantity of RBs included in the RBG) is 2, as shown in FIG. 4, the 10 RBs may be divided into 5 groups, to obtain 5 RBGs. The frequency-domain resources occupied by the PDSCH are indicated in a form of a bitmap (bitmap). By using an example in which indication information in the PDCCH is 10001, the PDSCH occupies an RBG0 and an RBG4.

A second indication manner is type1 (type1). In the indication manner, a start position (denoted as $RB_{start}$) and L of RBs in frequency domain are indicated in the PDCCH, where L represents a length of the occupied RBs. By using an example in which a bandwidth is 10 RBs, refer to FIG. 5. If $RB_{start}=2$ and L=3, the frequency-domain resources occupied by the PDSCH are an RB2, an RB3, and an RB4.

3. Indication mechanism of time-frequency resources of a PUSCH.

An indication method for time-domain resources of the PUSCH is similar to that for the PDSCH. A difference lies in that, for the PDSCH, a slot offset is represented by $K_0$, and for the PUSCH, a slot offset is represented by $K_2$.

An indication method for frequency-domain resources of the PUSCH is similar to that for the PDSCH.

4. Indication mechanism of an MCS.

The MCS is for describing a modulation manner and a target code rate (target code rate) that are used for information transmission. In the current technology, an MCS index table (index table) is predefined in a protocol or configured by a network device by using signaling. In the table, each row corresponds to a modulation order and a code rate. A network device may select a row in the table by using indication information, to notify a terminal of a modulation manner and a code rate that are used for data transmission. Table 2 is an example of the MCS table in the current technology. In the table, different modulation orders correspond to different modulation manners. For example, a modulation order $Q_m=2$, which corresponds to a quadrature phase shift keying (quadrature phase shift keying, QPSK) modulation manner; $Q_m=4$, which corresponds to 16 quadrature amplitude modulation (quadrature amplitude modulation, QAM); $Q_m=6$, which corresponds to 64QAM; and $Q_m=8$, which corresponds to 256QAM. Generally, the modulation manner and the code rate are determined through an MCS index. For example, if the MCS index notified by the network device to the terminal is 3, it can be learned based on the table that the modulation order $Q_m=2$, and the code rate is 449/1024. That is, the modulation manner used by the terminal is QPSK, and the code rate is 449/1024.

**Table 2**

| MCS index | $Q_m$ | Product of a code rate and 1024 | Spectral efficiency (Spectral efficiency) |
|---|---|---|---|
| 0 | 2 | 120 | 0.2344 |
| 1 | 2 | 193 | 0.3770 |
| 2 | 2 | 308 | 0.6016 |
| 3 | 2 | 449 | 0.8770 |
| 4 | 2 | 602 | 1.1758 |
| 5 | 4 | 378 | 1.4766 |
| 6 | 4 | 434 | 1.6953 |
| ... | ... | ... | ... |
| 27 | 8 | 948 | 7.4063 |
| 28 | 2 | Reserved (reserved) | |
| 29 | 4 | Reserved | |
| 30 | 6 | Reserved | |
| 31 | 8 | Reserved | |

To support wider application, three tables are provided in the current technology. Each table corresponds to different reliability requirements. A table to be specifically selected may be configured for the terminal by using a high layer configuration parameter.

5. Calculation of a transport block size (transport block size, TBS).

During communication, data sent from a media access control (media access control, MAC) layer to a physical layer is organized in a form of a transport block (transport block, TB), and data transmission between a network device and a terminal is also performed in a unit of a TB. After determining a time-frequency resource allocated to the data, the terminal needs to determine a TB S based on the time-frequency resource and an MCS.

A third piece of information may be obtained by calculation based on any two of a size of the data, the MCS of the data, or the time-frequency resource of the data. For details about detailed calculation of the TBS, reference may be made to related descriptions in NR R15 protocol 38.214.

6. Manner for transmitting two TBs in a same physical channel (a PDSCH or a PUSCH).

When two TBs are transmitted in one physical channel, the two TBs are independently coded and modulated, and then mapped to different layers. That is, different TBs are distinguished through spatial dimensions. A quantity of layers represents a quantity of data streams that can be independently transmitted, one layer represents that one data stream can be independently transmitted on a same time-frequency resource, and two layers represent that two data streams can be independently transmitted on a same time-frequency resource. Multi-stream data transmission on a same time-frequency resource is implemented through spatial dimensions.

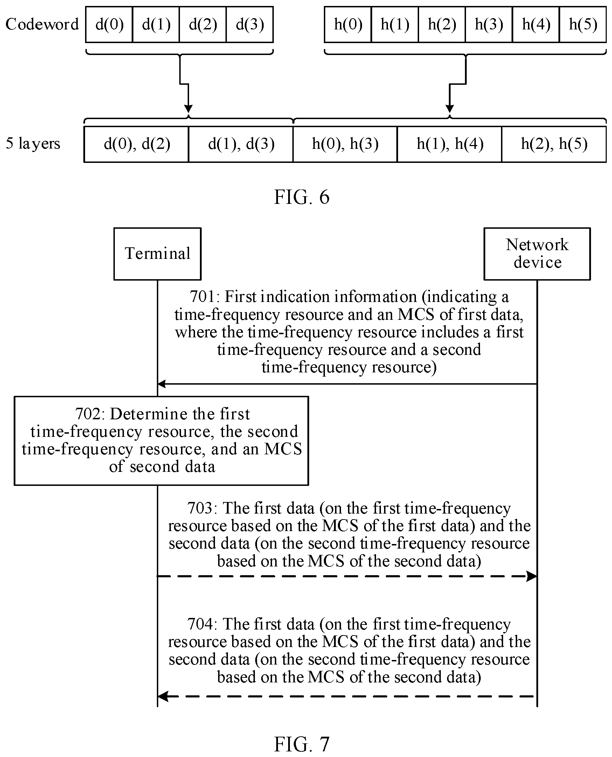

Specifically, refer to FIG. 6. Two codewords (codeword) correspond to two TBs. A codeword 1 corresponds to a TB1, and symbols obtained after the TB1 is coded and modulated are d(0), d(1), d(2), and d(3). A codeword 2 corresponds to a TB2, and symbols obtained after the TB2 is coded and modulated independently of the TB1 are h(0), h(1), h(2), h(3), h(4), and h(5). Currently, there are 5 layers for PDSCH transmission. Therefore, the modulated symbols corresponding to the TB1 are mapped to a first layer and a second layer, and the modulated symbols corresponding to the TB2 are mapped to a third layer, a fourth layer, and a fifth layer. That is, modulated symbols corresponding to different TBs are independently mapped to different spatial dimensions. For a specific mapping process, reference may be made to the current technology. Details are not described again.

In many application scenarios of the 5G system, there is a wide range of scenarios in which a terminal reuses a plurality of services. For example, a smart grid terminal integrates three services: differential protection, a three-remote service (remote measurement, remote communication, and remote control), and a network timing service. For requirements for performance indicators such as reliability, latency, and a data rate, there are great differences between different services. In addition, in many scenarios, transmission slots are limited. For example, an uplink-downlink configuration of an existing public network is 7:3 or 8:2, that is, there are only a few uplink slots. Therefore, if a terminal reuses a plurality of services, the terminal faces a requirement of transmitting two or more services at a same scheduling moment. Generally, a same MCS is used for data transmitted in one physical channel. In this case, if a selected MCS meets a requirement of a service with a high reliability requirement (for example, a URLLC service), spectral efficiency of a service with a low reliability requirement (for example, an eMBB service) is reduced. On the contrary, if the selected MCS meets a requirement of the service with the low reliability requirement, although the spectral efficiency thereof is higher, the requirement of the service with the high reliability requirement may not be met.

If two types of service data are transmitted in one physical channel, there are two cases in the current technology. Case 1: A same MCS is used for the two types of service data. In this way, requirements of the two types of service data cannot be met simultaneously. Case 2: The two types of service data are reused through spatial dimensions, that is, transport blocks corresponding to different service data occupy different layers (layer). In Case 2, although different service data can be independently coded and modulated, flexibility is limited. On one hand, not all scenarios can support a very high spatial dimension. For example, for some terminals, there is only one or there are two transmit antennas, which is difficult to support a very large quantity of layers for data transmission. On the other hand, if two pieces of service data are reused through the spatial dimensions, two TBs are limited to necessarily occupying a same time-frequency resource, so that data transmission is not flexible enough. For example, in FIG. 6, quantities of symbols at different layers are 2, that is, quantities of symbols corresponding to two transmitted TBs necessarily have a determined correspondence. In FIG. 6, because a quantity of layers for transmitting the TB1 is 2 and a quantity of layers for transmitting the TB2 is 3, a ratio of modulation symbols corresponding to the TB1 to modulation symbols corresponding to the TB2 is 2:3. Such a determined proportional relationship cannot flexibly support data transmission. For example, when a data volume of one service is very large and a data volume corresponding to another service is very small, the current technology cannot flexibly support data transmission.

To meet requirements of different data and flexibly perform data transmission, two pieces of data had better use respective MCSs and time-frequency resources. Therefore, an embodiment of this application provides a communication method. The communication method may be specifically implemented by using methods shown in the following Embodiment 1 to Embodiment 3. A common point in Embodiment 1 to Embodiment 3 lies in that, all terminals need to determine time-frequency resources and MCSs of two pieces of data. A difference lies in that, in Embodiment 1, a network device indicates a total time-frequency resource of the two pieces of data and an MCS of one piece of the data to the terminal; in Embodiment 2, a network device indicates a time-frequency resource and an MCS of one of the two pieces of data to the terminal; and in Embodiment 3, a network device indicates at least sizes of the two pieces of data and the total time-frequency resource of the two pieces of data to the terminal.

In this embodiment of this application, a function of the network device may also be performed by a module (for example, a chip) in the network device, or may be performed by a control subsystem including a base station function. The control subsystem including the base station function herein may be a control center in an industrial Internet of Things application scenario such as a smart grid, factory automation, or intelligent transportation. A function of the terminal may also be performed by a module (for example, a chip) in the terminal.

**Embodiment 1**

FIG. 7 shows a communication method according to Embodiment 1 of this application.

701: A network device sends first indication information to a terminal, where the first indication information indicates a time-frequency resource and an MCS of first data, the time-frequency resource includes a first time-frequency resource and a second time-frequency resource, the first time-frequency resource is a time-frequency resource carrying the first data, and the second time-frequency resource is a time-frequency resource carrying second data. Correspondingly, the terminal receives the first indication information from the network device.

The first data and the second data in this application may be TBs. The first data and the second data may be two pieces of data with different service types, or may be two pieces of data with a same service type but have different reliability requirements. Both the first data and the second data may be newly transmitted data, or may be retransmitted data, or one of the first data and the second data may be newly transmitted data and the other may be retransmitted data. The first data and the second data may be uplink data, or may be downlink data.

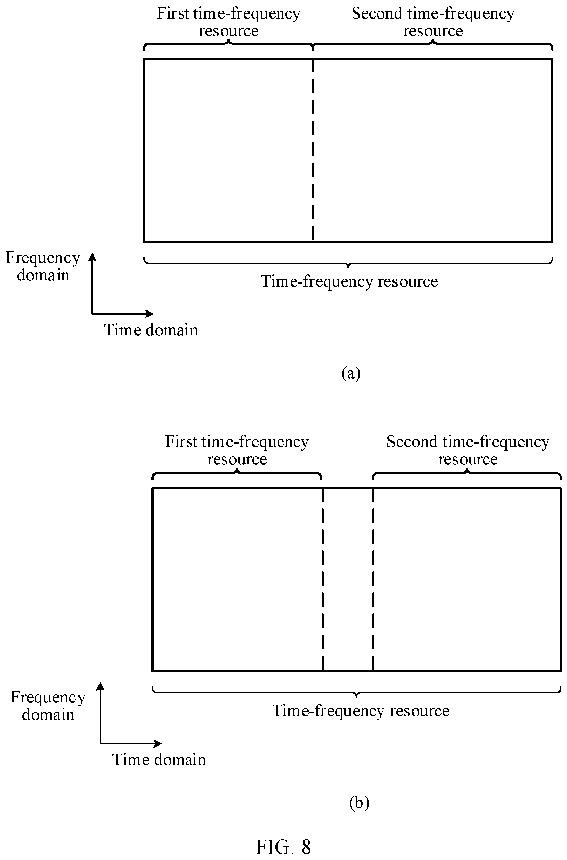

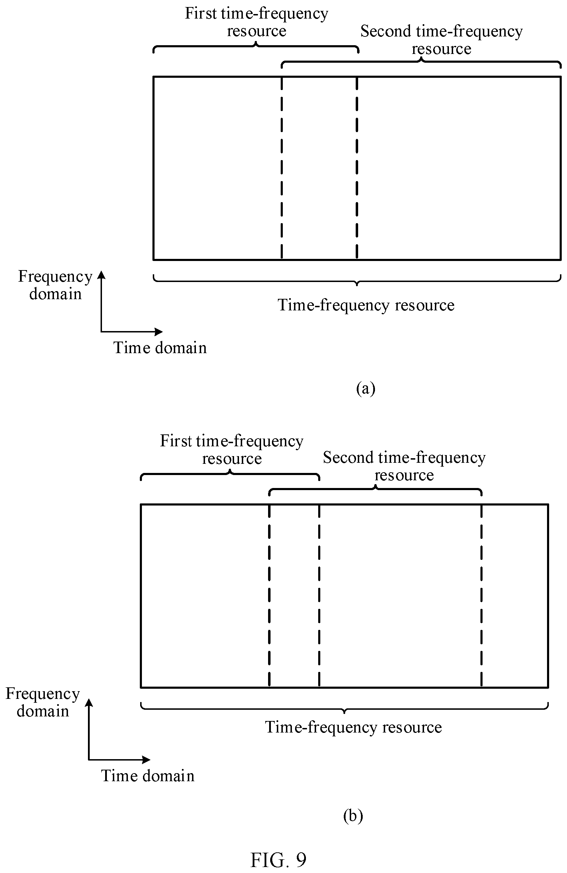

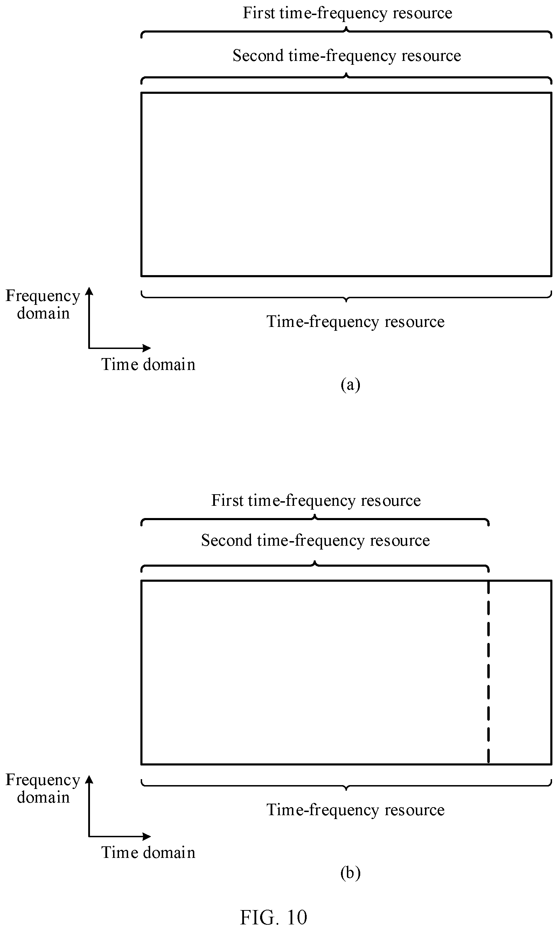

For that the time-frequency resource includes the first time-frequency resource and the second time-frequency resource, there may be two understandings. In one understanding, the time-frequency resource is formed by the first time-frequency resource and the second time-frequency resource. That is, the time-frequency resource includes only the first time-frequency resource and the second time-frequency resource, and does not include another resource. In another understanding, in addition to including the first time-frequency resource and the second time-frequency resource, the time-frequency resource further includes another resource, for example, a resource for transmitting a DMRS. The first time-frequency resource and the second time-frequency resource included in the time-frequency resource may entirely overlap, partially overlap, or may not overlap at all. As shown in (a) in FIG. 8 and (b) in FIG. 8, the first time-frequency resource and the second time-frequency resource do not overlap at all. In (a) in FIG. 8, the time-frequency resource includes only the first time-frequency resource and the second time-frequency resource. In (b) in FIG. 8, in addition to including the first time-frequency resource and the second time-frequency resource, the time-frequency resource further includes another resource. As shown in (a) in FIG. 9 and (b) in FIG. 9, the first time-frequency resource and the second time-frequency resource partially overlap. In (a) in FIG. 9, the time-frequency resource includes only the first time-frequency resource and the second time-frequency resource. In (b) in FIG. 9, in addition to including the first time-frequency resource and the second time-frequency resource, the time-frequency resource further includes another resource. As shown in (a) in FIG. 10 and (b) in FIG. 10, the first time-frequency resource and the second time-frequency resource entirely overlap. In (a) in FIG. 10, the time-frequency resource includes only the first time-frequency resource and the second time-frequency resource. In (b) in FIG. 10, in addition to including the first time-frequency resource and the second time-frequency resource, the time-frequency resource further includes another resource.

When the first time-frequency resource and the second time-frequency resource entirely or partially overlap, the first data and the second data may be transmitted on an overlapped time-frequency resource through different layers. For example, if four layers of data may be transmitted on the overlapped time-frequency resource, the first data may occupy one of the layers, and the second data may occupy three of the layers.

Optionally, when the first time-frequency resource and the second time-frequency resource entirely or partially overlap, the first data and the second data may be transmitted on the overlapped time-frequency resource through different powers. For example, if power for transmitting the first data is P1 and power for transmitting the second data is P2, a receive end may distinguish the first data and the second data based on different P1 and P2.

702: The terminal determines the first time-frequency resource, the second time-frequency resource, and an MCS of the second data.

Refer to FIG. 7. The method further includes step 703 or step 704.

703: The terminal sends the first data to the network device on the first time-frequency resource based on the MCS of the first data, and sends the second data to the network device on the second time-frequency resource based on the MCS of the second data. Correspondingly, the network device receives the first data from the terminal on the first time-frequency resource based on the MCS of the first data, and receives the second data from the terminal on the second time-frequency resource based on the MCS of the second data.

**EP 4 213 555 B1**

704: The network device sends the first data to the terminal on the first time-frequency resource based on the MCS of the first data, and sends the second data to the terminal on the second time-frequency resource based on the MCS of the second data. Correspondingly, the terminal receives the first data from the network device on the first time-frequency resource based on the MCS of the first data, and receives the second data from the network device on the second time-frequency resource based on the MCS of the second data.

Optionally, the first data and the second data are transmitted in a same physical channel. When the first data and the second data are uplink data, the physical channel is a PUSCH; and when the first data and the second data are downlink data, the physical channel is a PDSCH. The first data and the second data may be scheduled by using same DCI. The foregoing first indication information may be carried in the DCI.

The terminal may determine the first time-frequency resource in any one of the following Manner 11 to Manner 14.

Manner 11: The terminal determines a size of the first data, and determines the first time-frequency resource based on the size of the first data and the MCS of the first data that is indicated by the first indication information. Specifically, the network device may send fifth indication information to the terminal, where the fifth indication information indicates the size of the first data. Correspondingly, the terminal receives the fifth indication information from the network device, and determines the size of the first data based on the fifth indication information.

If the first data is newly transmitted data, in an implementation, the fifth indication information is carried in high layer signaling (for example, RRC signaling). In some scenarios, this implementation can meet service requirements. For example, if the first data is URLLC service data, the URLLC service data is a small packet, and a packet size is relatively fixed. Therefore, the size of the data is configured by using the high layer signaling. In another implementation, the network device configures a candidate TBS set for the terminal by using high layer signaling. For example, the candidate set may include a TBS1, a TBS2, and a TBS3. Further, the fifth indication information in the DCI indicates, from the candidate set, a TBS as a TBS of the first data. The DCI herein may be the DCI for scheduling the first data and the second data.

If the first data is retransmitted data, the fifth indication information is indication information indicating that the first data is the retransmitted data. In this case, the terminal may determine a size of the retransmitted data based on a size of newly transmitted data corresponding to the retransmitted data. Optionally, the fifth indication information may indicate, by using a new data indicator (new data indicator, NDI) field in the DCI, that the first data is the retransmitted data. If an MCS indicator field does not indicate the MCS of the first data, the fifth indication information may alternatively be the MCS indicator field. For example, refer to Table 2. If an MCS index of the first data is 28, 29, 30, or 31, the first data may be indicated as the retransmitted data.

In another implementation, there may be a correspondence between the size of the first data and a size of the second data. In this case, after learning the size of the second data, the terminal may determine the size of the first data based on the correspondence. When the second data is newly transmitted data or retransmitted data, determining of the size of the second data is similar to that of the first data. In addition, the size of the second data may also be determined based on the time-frequency resource carrying the second data and the MCS of the second data. Specifically, the size of the first data and the size of the second data may differ by a fixed difference X. For example, when the first data is A1, the size of the second data is A1+X, where X may be a positive value, or may be a negative value. Alternatively, the size of the first data and the size of the second data may differ by a scale factor R0, where R0 is a positive real number. For example, when the first data is A1, the size of the second data is an integer value corresponding to A1 multiplied by R0 (or A1 divided by R0). For example, when A1=256 and R0=0.7, A1 multiplied by R0 is 179.2. In this application, the integer value corresponding to the real number may be obtained by using one of the following three rounding schemes, which may be rounding down (to obtain 179), rounding up (to obtain 180), or rounding off (to obtain 179).

In Manner 11, a third piece of information may be obtained by calculation based on any two of a size of data, an MCS of the data, or a time-frequency resource of the data. After the terminal determines the size of the first data and determines the MCS of the first data based on the first indication information, the terminal may determine the first time-frequency resource based on the size of the first data and the MCS of the first data. For example, if a quantity of resource elements (resource element, RE) for data transmission in the first time-frequency resource is N and the TBS of the first data is X, spectral efficiency SE1 may be obtained by calculation, and a modulation manner and a code rate that meet a requirement are selected from an MCS table by using the spectral efficiency SE1. For example, a modulation manner and a code rate corresponding to spectral efficiency that is closest to the spectral efficiency SE1 in the MCS table may be selected, or a modulation manner and a code rate corresponding to spectral efficiency that is greater than the spectral efficiency SE1 and that is closest to the spectral efficiency SE1 in the MCS table may be selected, or a modulation manner and a code rate corresponding to spectral efficiency that is less than the spectral efficiency SE1 and that is closest to the spectral efficiency SE1 in the MCS table may be selected.

Manner 12: The terminal determines the first time-frequency resource based on the time-frequency resource indicated by the first indication information and a relationship between the first time-frequency resource and the time-frequency resource.

Specifically, the relationship between the first time-frequency resource and the time-frequency resource may be a proportional relationship, for example, a ratio (denoted as R1, where R1 is greater than 0 and less than or equal to 1) of the

14

first time-frequency resource to the time-frequency resource. In this case, after the terminal determines the time-frequency resource based on the first indication information, if the time-frequency resource includes M (where M is an integer greater than 0) REs, a quantity of REs in the first time-frequency resource is an integer value corresponding to M*R1, where "*" represents "multiplied by". R1 may be indicated by the network device to the terminal. Optionally, R1 may be notified to the terminal by using DCI, RRC signaling, or the like. For example, a R1 set may be configured by using the RRC signaling. For example, the R1 set includes A, B, C, and D, and R1 is indicated from the R1 set by using the DCI, for example, A, to be used as the actually used R1.

The relationship between the first time-frequency resource and the time-frequency resource may also be a correspondence. For example, when the time-frequency resource is A3, the first time-frequency resource is B3; and when the time-frequency resource is A4, the first time-frequency resource is B4. B3 and B4 may be the same or may be different. Optionally, the correspondence between the first time-frequency resource and the time-frequency resource may be notified to the terminal by using the RRC signaling.

Manner 13: The network device sends second indication information to the terminal, where the second indication information indicates the first time-frequency resource. The terminal receives the second indication information, and determines the first time-frequency resource based on the second indication information. The second indication information may be carried in signaling. In this application, various messages or information may be carried in signaling, and the signaling may be RRC signaling, media access control control element (media access control control element, MAC CE) signaling, or DCI. Different messages or information in this application may be carried in same signaling, or may be carried in different signaling. For example, one or some messages or information and the first indication information may be carried in different DCI, or may be carried in same DCI.

Manner 14: The terminal determines the first time-frequency resource based on the time-frequency resource indicated by the first indication information and the second time-frequency resource.

If the terminal has determined the second time-frequency resource, the terminal may determine, by using a preset rule, the first time-frequency resource based on the time-frequency resource indicated by the first indication information and the second time-frequency resource. For a method for determining the second time-frequency resource, reference may be made to the following descriptions.

If the first time-frequency resource and the second time-frequency resource do not overlap, the terminal may determine a time-frequency resource that is for data transmission and that is other than the second time-frequency resource in the time-frequency resource indicated by the first indication information as the first time-frequency resource. It should be noted that, the time-frequency resource may include resources for transmitting other signals, and these resources cannot be for data transmission. Therefore, time-frequency resources other than the second time-frequency resource in the time-frequency resource may not be all used as the first time-frequency resource, but the time-frequency resource for data transmission is used as the first time-frequency resource.

The terminal may determine the second time-frequency resource in any one of the following Manner 21 to Manner 24.

Manner 21: The terminal determines the size of the second data, and determines the second time-frequency resource based on the MCS of the second data and the size of the second data. The network device may send sixth indication information to the terminal, where the sixth indication information indicates the size of the second data. Correspondingly, the terminal receives the sixth indication information from the network device, and determines the size of the second data based on the sixth indication information. The method for which the terminal determines the size of the second data may be directly obtained based on the foregoing Manner 11.

If the terminal determines the size of the second data and further determines the MCS of the second data, the terminal may determine the second time-frequency resource based on the size of the second data and the MCS of the second data. For a method for determining the MCS of the second data, reference may be made to the following descriptions.

Manner 22: The terminal determines the second time-frequency resource based on the time-frequency resource indicated by the first indication information and a relationship between the second time-frequency resource and the time-frequency resource indicated by the first indication information. A specific implementation process may be directly obtained based on the foregoing Manner 12.

Manner 23: The network device sends third indication information to the terminal, where the third indication information indicates the second time-frequency resource. The terminal receives the third indication information, and determines the second time-frequency resource based on the third indication information.

Manner 24: The terminal determines the second time-frequency resource based on the time-frequency resource indicated by the first indication information and the first time-frequency resource.

If the terminal has determined the first time-frequency resource, the terminal may determine, by using a preset rule, the second time-frequency resource based on the time-frequency resource indicated by the first indication information and the first time-frequency resource. For a method for determining the first time-frequency resource, reference may be made to the foregoing descriptions.

The terminal may determine the MCS of the second data in any one of the following Manner 31 to Manner 33.

Manner 31: The terminal determines the MCS of the second data based on the MCS of the first data indicated by the first indication information and a relationship between the MCS of the first data and the MCS of the second data.

In a first implementation, there is a correspondence between an MCS index (index) of the second data and an MCS index of the first data. For example, there is an offset (offset) between the MCS index of the second data and the MCS index of the first data. The offset may be a positive number, or may be a negative number. For example, if the index corresponding to the MCS of the first data is 1 and the offset is 5, the index corresponding to the MCS of the second data is 6, and the terminal determines that an MCS whose index is 6 in an MCS table (for example, the foregoing Table 2) is the MCS of the second data. If the index corresponding to the MCS of the first data is 5 and the offset is -2, the index corresponding to the MCS of the second data is 3, and the terminal determines that an MCS whose index is 3 in the MCS table is the MCS of the second data. The offset may be default, or may be indicated by the network device by using indication information.

It should be noted that, if the MCS index of the second data determined by using the offset exceeds an index range of the MCS table, for example, the MCS index of the first data is 3 but the offset is -5, and it is found after calculation that the index of the second data is -2, in this case, an index closest to the index obtained by calculation in the MCS table may be selected as the MCS index of the second data. Therefore, the MCS index of the second data may be obtained as 0. Similarly, when the index obtained by calculation is excessively large, the index may also exceed the index range of the MCS table. In this case, an index closest to the index obtained by calculation in the MCS table may also be used as the MCS index of the second data.

In a second implementation, it can be learned based on the foregoing descriptions that an MCS includes a modulation manner and a code rate. Therefore, a modulation manner of the second data may be the same as a modulation manner of the first data, and there is a relationship between a code rate of the second data and a code rate of the first data. The relationship between the code rate of the second data and the code rate of the first data may be a proportional relationship. For example, the code rate of the second data is R2 times (where R2 is greater than 0) of the code rate of the first data. Therefore, if the code rate of the first data is Rx, the code rate of the second data is Rx*R2. R2 may be indicated by the network device to the terminal. Optionally, R2 may be 0. If R2 is 0, it represents that the second data is not transmitted. That is, only one piece of data is transmitted. Optionally, the network device may indicate, by determining whether R2 is 0, several pieces of data to be transmitted.

Manner 32: The network device sends fourth indication information to the terminal, where the fourth indication information indicates the MCS of the second data. For example, the fourth indication information may be an MCS index of the second data. The terminal receives the fourth indication information, and determines the MCS of the second data based on the fourth indication information.

Manner 33: The terminal determines the size of the second data, and determines the MCS of the second data based on the size of the second data and the second time-frequency resource.

The method for which the terminal determines the size of the second data may be directly obtained based on the method for determining the size of the first data in the foregoing Manner 11. After the terminal determines the size of the second data, if the terminal further determines the second time-frequency resource, the terminal may determine the MCS of the second data based on the size of the second data and the second time-frequency resource. For a method for determining the second time-frequency resource, reference may be made to the foregoing descriptions.

Based on the foregoing various manners, optionally, at least one of the first time-frequency resource, the second time-frequency resource, or the MCS of the second data is determined based on the first indication information. In this case, there may be a plurality of schemes shown in Table 3 for implementation of step 702.

**Table 3**

| Scheme | Manner for calculating the first time-frequency resource | Manner for calculating the second time-frequency resource | Manner for calculating the MCS of the second data |
|---|---|---|---|
| Scheme 1 | Manner 11 | Manner 21 | Manner 31 |
| Scheme 2 | | | Manner 32 |
| Scheme 3 | | Manner 22 | Manner 31 |
| Scheme 4 | | | Manner 32 |
| Scheme 5 | | | Manner 33 |
| Scheme 6 | | Manner 23 | Manner 31 |
| Scheme 7 | | | Manner 32 |
| Scheme 8 | | | Manner 33 |
| Scheme 9 | | Manner 24 | Manner 31 |
| Scheme 10 | | | Manner 32 |
| Scheme 11 | | | Manner 33 |
| Scheme 12 | Manner 12 | Manner 21 | Manner 31 |
| Scheme 13 | | | Manner 32 |
| Scheme 14 | | Manner 22 | Manner 31 |
| Scheme 15 | | | Manner 32 |
| Scheme 16 | | | Manner 33 |
| Scheme 17 | | Manner 23 | Manner 31 |
| Scheme 18 | | | Manner 32 |
| Scheme 19 | | | Manner 33 |
| Scheme 20 | | Manner 24 | Manner 31 |
| Scheme 21 | | | Manner 32 |
| Scheme 22 | | | Manner 33 |
| Scheme 23 | Manner 13 | Manner 21 | Manner 31 |
| Scheme 24 | | Manner 22 | Manner 31 |
| Scheme 25 | | | Manner 32 |
| Scheme 26 | | | Manner 33 |
| Scheme 27 | | Manner 23 | Manner 31 |
| Scheme 28 | | Manner 24 | Manner 31 |
| Scheme 29 | | | Manner 32 |
| Scheme 30 | | | Manner 33 |
| Scheme 31 | Manner 14 | Manner 21 | Manner 31 |
| Scheme 32 | | | Manner 32 |
| Scheme 33 | | Manner 22 | Manner 31 |
| Scheme 34 | | | Manner 32 |
| Scheme 35 | | | Manner 33 |
| Scheme 36 | | Manner 23 | Manner 31 |
| Scheme 37 | | | Manner 32 |
| Scheme 38 | | | Manner 33 |

In the various schemes shown in Table 3, a relationship among a time-frequency resource, a size of data, and an MCS of the data is fully used to determine the first time-frequency resource, the second time-frequency resource, and the MCS of the second data, so that overheads of signaling for indication can be reduced.

Based on the foregoing various manners, optionally, none of the first time-frequency resource, the second time-frequency resource, and the MCS of the second data may also be determined based on the first indication information. In this case, there may be a plurality of schemes shown in Table 4 for implementation of step 702.

**Table 4**

| Scheme | Manner for calculating the first time-frequency resource | Manner for calculating the second time-frequency resource | Manner for calculating the MCS of the second data |
|---|---|---|---|
| Scheme 1 | Manner 13 | Manner 21 | Manner 32 |
| Scheme 2 | | Manner 23 | Manner 33 |

In the schemes shown in Table 4, determining of the first time-frequency resource, the second time-frequency resource, and the MCS of the second data is decoupled from the first indication information. In this way, resources and MCSs can be indicated more flexibly.

In the method provided in Embodiment 1, if there are two pieces of data, the terminal may determine time-frequency resources and MCSs of the two pieces of data, to meet reliability requirements of different pieces of data and flexibly perform data transmission. Compared with performing joint modulation and coding on the two pieces of data based on a reliability requirement of one piece of the data (for example, a same MCS is used for the two pieces of data), respective MCSs are used for the two pieces of data, which avoids a resource waste when meeting reliability of the two pieces of data. In addition, if at least one of the first time-frequency resource, the second time-frequency resource, or the MCS of the second data is determined based on the first indication information, overheads of signaling can be reduced compared with that when the first time-frequency resource, the second time-frequency resource, and the MCS of the second data are all indicated by using the indication information.

In addition, in the current technology, when two or more pieces of service data are transmitted in one physical channel, MCSs cannot be flexibly indicated and time-frequency resources cannot be flexibly allocated. However, in this application, an appropriate MCS may be selected according to a service requirement. On one hand, robustness of data with a high reliability requirement can be ensured, and on the other hand, spectral efficiency of data with a low reliability requirement can be ensured.

**Embodiment 2**

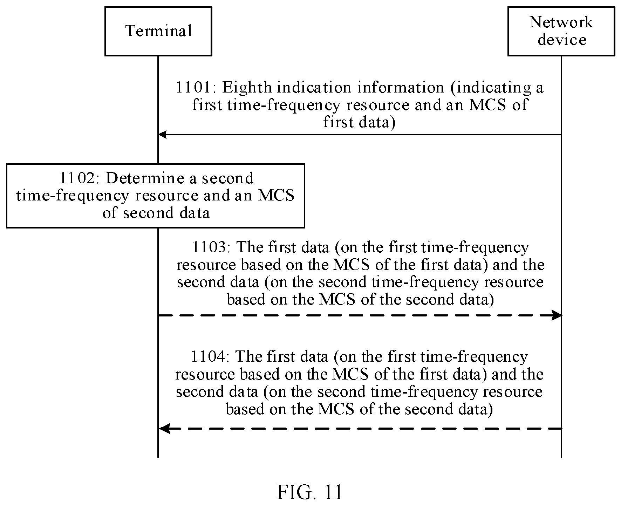

FIG. 11 shows a communication method according to Embodiment 2 of this application.

1101: A network device sends eighth indication information to a terminal, where the eighth indication information indicates a first time-frequency resource and an MCS of first data, the first time-frequency resource is a time-frequency resource carrying the first data, the eighth indication information is further used by the terminal to determine at least one of a second time-frequency resource or an MCS of second data, and the second time-frequency resource is a time-frequency resource carrying the second data. Correspondingly, the terminal receives the eighth indication information from the network device.

For related descriptions of the first data, the second data, the first time-frequency resource, and the second time-frequency resource, reference may be made to Embodiment 1.

1102: The terminal determines the second time-frequency resource and the MCS of the second data.

Refer to FIG. 11. The method further includes step 1103 or step 1104.

1103: The terminal sends the first data to the network device on the first time-frequency resource based on the MCS of the first data, and sends the second data to the network device on the second time-frequency resource based on the MCS of the second data. Correspondingly, the network device receives the first data from the terminal on the first time-frequency resource based on the MCS of the first data, and receives the second data from the terminal on the second time-frequency resource based on the MCS of the second data. For related descriptions of step 1103, reference may be made to the foregoing step 703. Details are not described again.

1104: The network device sends the first data to the terminal on the first time-frequency resource based on the MCS of the first data, and sends the second data to the terminal on the second time-frequency resource based on the MCS of the second data. Correspondingly, the terminal receives the first data from the network device on the first time-frequency resource based on the MCS of the first data, and receives the second data from the network device on the second time-frequency resource based on the MCS of the second data. For related descriptions of step 1104, reference may be made to the foregoing step 704. Details are not described again.

Optionally, the first data and the second data are transmitted in a same physical channel. For related descriptions of the optional feature, reference may be made to a corresponding feature in Embodiment 1. Details are not described again.

The terminal may determine the second time-frequency resource in the following Manner 11 or Manner 12.

Manner 11: The network device sends third indication information to the terminal, where the third indication information indicates the second time-frequency resource. The terminal receives the third indication information, and determines the second time-frequency resource based on the third indication information.

Manner 12: The terminal determines the second time-frequency resource based on the first time-frequency resource indicated by the eighth indication information and a relationship between the first time-frequency resource and the second time-frequency resource; or the terminal respectively determines, based on two pieces of indication information, a time-domain resource (denoted as a second time-domain resource) and a frequency-domain resource (denoted as a second frequency-domain resource) that are included in the second time-frequency resource (that is, both the second time-domain resource and the second frequency-domain resource are indicated by the network device).

When the terminal determines the second time-frequency resource based on the first time-frequency resource indicated by the eighth indication information and the relationship between the first time-frequency resource and the second time-frequency resource, there may be a plurality of implementations in Manner 12.

In a first implementation, the second time-domain resource is indicated by the network device, and there is a relationship between the second frequency-domain resource and a frequency-domain resource (denoted as a first frequency-domain resource) in the first time-frequency resource. In this case, the terminal may determine the second time-domain resource based on indication of the network device, and determine the second frequency-domain resource based on the relationship between the second frequency-domain resource and the first frequency-domain resource.

In a second implementation, the second frequency-domain resource is indicated by the network device, and there is a relationship between the second time-domain resource and a time-domain resource (denoted as a first time-domain resource) in the first time-frequency resource. In this case, the terminal may determine the second frequency-domain resource based on indication of the network device, and determine the second time-domain resource based on the relationship between the second time-domain resource and the first time-domain resource.

In a third implementation, there is a relationship between the second frequency-domain resource and a first frequency-domain resource, and there is a relationship between the second time-domain resource and a first time-domain resource. In this case, the terminal may determine the second frequency-domain resource based on the relationship between the second frequency-domain resource and the first frequency-domain resource, and determine the second time-domain resource based on the relationship between the second time-domain resource and the first time-domain resource.

The relationship between the second time-domain resource and the first time-domain resource may include the following several types.

(1) The second time-domain resource and the first time-domain resource are located in a same row of a time-domain resource allocation table (for example, the foregoing Table 1). In this case, several columns for indicating information about the second time-domain resource may be added to the time-domain resource allocation table. By using Table 1 as an example, four columns may be further added, and the four columns respectively indicate a PDSCH mapping type of the second time-domain resource, $K_0$ of the second time-domain resource, S of the second time-domain resource, and L of the second time-domain resource. In this case, after the first time-domain resource is determined, the second time-domain resource is also determined.

(2) There is an offset (offset) between an index of the second time-domain resource and an index of the first time-domain resource. The offset may be a positive number, or may be a negative number. For example, if the index of the first time-domain resource is 1 and the offset is 5, the index of the second time-domain resource is 6, and the terminal determines that a time-domain resource whose index is 6 in a time-domain resource allocation table (for example, the foregoing Table 1) is the second time-domain resource. If the index of the first time-domain resource is 5 and the offset is -2, the index of the second time-domain resource is 3, and the terminal determines that a time-domain resource whose index is 3 in the time-domain resource allocation table is the second time-domain resource. The offset may be default, or may be indicated by the network device by using indication information.

It should be noted that, if the index of the second time-domain resource determined by using the offset exceeds an index range of the time-domain resource allocation table, for example, the index of the first time-domain resource is 3 but the offset is -5, and it is found after calculation that the index of the second time-domain resource is -2, in this case, an index closest to the index obtained by calculation in the time-domain resource allocation table may be selected as the index of the second time-domain resource. Therefore, the index of the second time-domain resource may be obtained as 0. Similarly, when the index obtained by calculation is excessively large, the index may also exceed the index range of the time-domain resource allocation table. In this case, an index closest to the index obtained by calculation in the time-domain resource allocation table may also be used as the index of the second time-domain resource.

Both (1) and (2) may be considered that there is an index relationship between the second time-domain resource and the first time-domain resource, and are only two cases in this scenario.

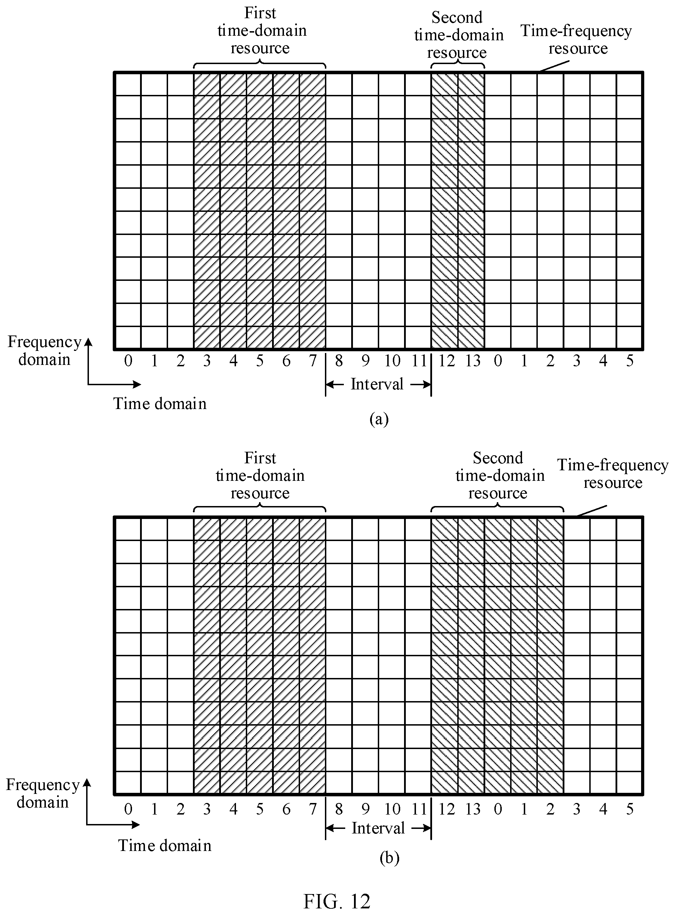

(3) There is an interval between the second time-domain resource and the first time-domain resource (that is, there is an offset between the second time-domain resource and the first time-domain resource). Further, a quantity of symbols occupied by the second time-domain resource and a quantity of symbols occupied by the first time-domain resource are the same, or may have a proportional relationship. The interval may be 0, or may be a value greater than 0. A ratio of the quantity of symbols occupied by the second time-domain resource to the quantity of symbols occupied by the first time-domain resource may be indicated by using a scale factor, and the scale factor may be a value greater than 0. The interval and the scale factor may be indicated by the network device, or may be preconfigured (for example, the scale factor may be configured in a time-domain resource allocation table. In this case, when a row in the time-domain resource allocation table is indicated, not only a resource in the row is indicated, but also a scale factor is indicated). For example, one slot includes 14 symbols, a start symbol of the first time-domain resource is a symbol 3, and a symbol length is 5 symbols, that is, the first time-domain resource occupies the symbol 3 to a symbol 7 in the slot. If the interval is 4 symbols and the scale factor is 1 (that is, a symbol length of the second time-domain resource is also 5 symbols), it may be determined that a start symbol of the second time-domain resource is a symbol 12. Therefore, only the symbol 12 and a symbol 13 are available in the slot, and in this case, it is considered that the second time-domain resource crosses a boundary of the slot. Therefore, there may be two methods for determining the second time-domain resource. (1) Refer to (a) in FIG. 12. The second time-domain resource is not allowed to cross the boundary of the slot, and in this case, the second time-domain resource is the symbol 12 and the symbol 13. (2) Refer to (b) in FIG. 12. The second time-domain resource is allowed to cross the boundary of the slot, and in this case, the second time-domain resource is the symbol 12, the symbol 13, and a symbol 1 to a symbol 3 in a next slot.

Optionally, the second time-domain resource and the first time-domain resource may be indicated by using a same indicator field. That is, the second time-domain resource may be determined by using the indicator field indicating the first time-domain resource. The relationship between the second frequency-domain resource and the first frequency-domain resource may include the following several types.

(1) The second frequency-domain resource is the same as the first frequency-domain resource. In this case, after the first frequency-domain resource is determined, the second frequency-domain resource is also determined.

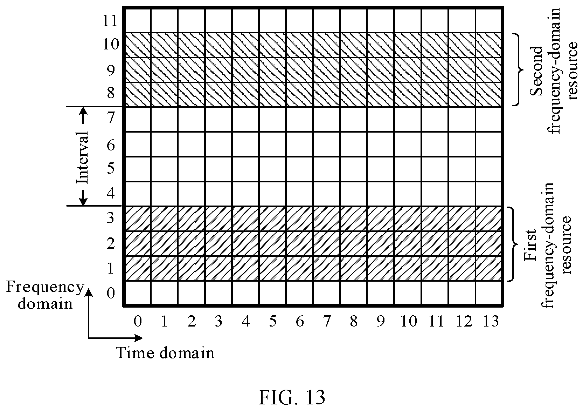

(2) There is an interval between the second frequency-domain resource and the first frequency-domain resource (that is, there is an offset between the second frequency-domain resource and the first frequency-domain resource). Further, a quantity of RBs occupied by the second frequency-domain resource and a quantity of RBs occupied by the first frequency-domain resource may be equal to each other, or may have a proportional relationship. The interval may be 0, or may be a value greater than 0. A ratio of the quantity of RBs occupied by the second frequency-domain resource to the quantity of RBs occupied by the first frequency-domain resource may be indicated by using a scale factor, and the scale factor may be a value greater than 0. The interval and the scale factor may be indicated by the network device, or may be preconfigured. For example, refer to FIG. 13. A start RB of the first frequency-domain resource is an RB1, and an RB length is 3 RBs, that is, the first frequency-domain resource occupies the RB1 to an RB3. If the interval is 4 RBs and the scale factor is 1 (that is, an RB length of the second frequency-domain resource is also 3 RBs), it may be determined that RBs occupied by the second frequency-domain resource are an RB8 to an RB10.

The terminal may determine the MCS of the second data in the following Manner 21 or Manner 22.

Manner 21: The terminal determines the MCS of the second data based on the MCS of the first data indicated by the eighth indication information and a relationship between the MCS of the first data and the MCS of the second data. For specific implementation of Manner 21, reference may be made to Manner 31 in Embodiment 1.

Manner 22: The network device sends fourth indication information to the terminal, where the fourth indication information indicates the MCS of the second data. For example, the fourth indication information may indicate an MCS index of the second data. The terminal receives the fourth indication information, and determines the MCS of the second data based on the fourth indication information. Based on the foregoing various manners, optionally, at least one of the second time-frequency resource or the MCS of the second data is determined based on the eighth indication information. In this case, there may be a plurality of schemes shown in Table 5 for implementation of step 1102.

**Table 5**

| Scheme | Manner for calculating the second time-frequency resource | Manner for calculating the MCS of the second data |
|---|---|---|
| Scheme 1 | Manner 11 | Manner 21 |

(continued)

| Scheme | Manner for calculating the second time-frequency resource | Manner for calculating the MCS of the second data |
|---|---|---|
| Scheme 2 | Manner 12 | Manner 21 |
| Scheme 3 | | Manner 22 |

In the scheme 1, the MCS of the second data is determined by using the relationship between the MCS of the first data and the MCS of the second data, so that overheads of signaling for indicating the MCS of the second data can be reduced. In the scheme 2, the second time-frequency resource and the MCS of the second data are respectively determined by using the first time-frequency resource and the MCS of the first data, so that overheads of signaling for indicating the second time-frequency resource and the MCS of the second data can be reduced. In the scheme 3, determining of the MCS of the second data does not depend on the MCS of the first data. In this way, flexibility of indicating the MCS of the second data can be effectively improved.

Based on the foregoing various manners, optionally, neither of the second time-frequency resource and the MCS of the second data may also be determined based on the eighth indication information. In this case, there may be a scheme shown in Table 6 for implementation of step 1102.

**Table 6**

| Scheme | Manner for calculating the second time-frequency resource | Manner for calculating the MCS of the second data |
|---|---|---|
| Scheme 1 | Manner 11 | Manner 22 |

In the method provided in Embodiment 2, if there are two pieces of data, the terminal may determine time-frequency resources and MCSs of the two pieces of data, to meet reliability requirements of different pieces of data and flexibly perform data transmission. Compared with performing joint modulation and coding on the two pieces of data based on a reliability requirement of one piece of the data (for example, a same MCS is used for the two pieces of data), respective MCSs are used for the two pieces of data, which avoids a resource waste when meeting reliability of the two pieces of data. In addition, if at least one of the second time-frequency resource or the MCS of the second data is determined based on the eighth indication information, overheads of signaling can be reduced compared with that when the second time-frequency resource and the MCS of the second data are all indicated by using the indication information.

In addition, in the current technology, when two or more pieces of service data are transmitted in one physical channel, MCSs cannot be flexibly indicated and time-frequency resources cannot be flexibly allocated. However, in this application, an appropriate MCS may be selected according to a service requirement. On one hand, robustness of data with a high reliability requirement can be ensured, and on the other hand, spectral efficiency of data with a low reliability requirement can be ensured.

**Embodiment 3**

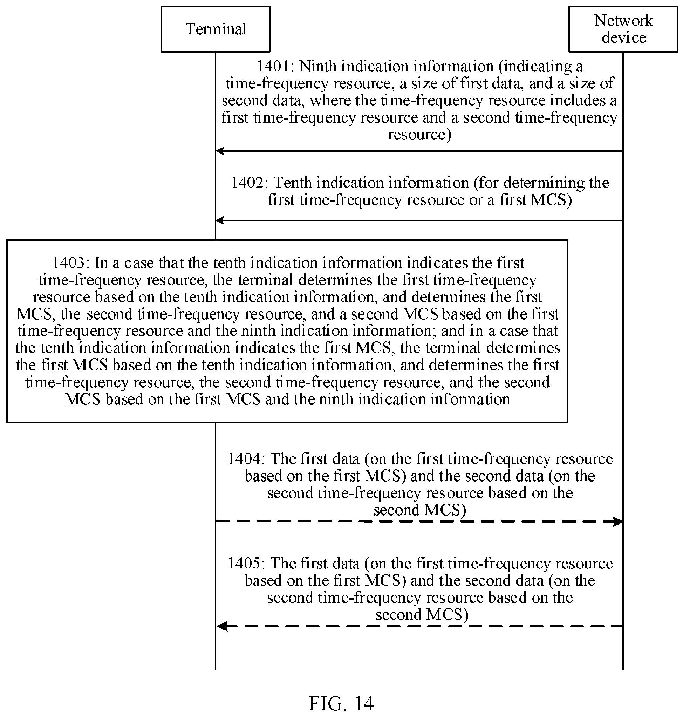

FIG. 14 shows a communication method according to Embodiment 3 of this application.

1401: A network device sends ninth indication information to a terminal, where the ninth indication information indicates a time-frequency resource, a size of first data, and a size of second data, the time-frequency resource includes a first time-frequency resource and a second time-frequency resource, the first time-frequency resource is a time-frequency resource carrying the first data, and the second time-frequency resource is a time-frequency resource carrying the second data. Correspondingly, the terminal receives the ninth indication information from the network device. For related descriptions of the first data, the second data, the first time-frequency resource, and the second time-frequency resource, reference may be made to Embodiment 1. Details are not described again.

The ninth indication information may directly or indirectly indicate the size of the first data and the size of the second data. For example, in a case of indirect indication, the ninth indication information indicates the size of the first data by indicating information for determining the size of the first data, and indicates the size of the second data by indicating information for determining the size of the second data. Optionally, the first data and the second data are transmitted in a same physical channel. For related descriptions of the optional method, reference may be made to the foregoing descriptions. Details are not described again.

1402: The network device sends tenth indication information to the terminal, where the tenth indication information is for determining the first time-frequency resource or a first MCS, and the first MCS is an MCS for sending or receiving the first data on the first time-frequency resource. Correspondingly, the terminal receives the tenth indication information from the network device.

If the tenth indication information is for determining the first time-frequency resource, the tenth indication information may directly indicate the first time-frequency resource. In this case, the terminal may directly determine the first time-frequency resource based on the tenth indication information. Alternatively, the tenth indication information may indirectly indicate the first time-frequency resource, for example, indicate a relationship between the first time-frequency resource and the time-frequency resource (for example, a ratio of the first time-frequency resource to the time-frequency resource). In this case, the terminal may determine the first time-frequency resource based on the tenth indication information and the time-frequency resource. For a specific method, reference may be made to Manner 12 in Embodiment 1. Details are not described again.

If the tenth indication information is for determining the first MCS, the tenth indication information may indicate the first MCS, and the terminal determines the first MCS based on the tenth indication information.

1403: If the tenth indication information indicates the first time-frequency resource, the terminal determines the first time-frequency resource based on the tenth indication information, and determines the first MCS, the second time-frequency resource, and a second MCS based on the first time-frequency resource and the ninth indication information; and if the tenth indication information indicates the first MCS, the terminal determines the first MCS based on the tenth indication information, and determines the first time-frequency resource, the second time-frequency resource, and the second MCS based on the first MCS and the ninth indication information. The second MCS is an MCS for sending or receiving the second data on the second time-frequency resource.

If the tenth indication information is for determining the first time-frequency resource, an implementation process of step 1403 includes: (11) determining the first time-frequency resource based on the tenth indication information; (12) determining the first MCS based on the first time-frequency resource and the size of the first data that is indicated by the ninth indication information; (13) determining the second time-frequency resource based on the first time-frequency resource and the time-frequency resource that is indicated by the ninth indication information; and (14) determining the second MCS based on the second time-frequency resource and the size of the second data that is indicated by the ninth indication information.

If the tenth indication information is for determining the first MCS, an implementation process of step 1403 includes: (21) determining the first MCS based on the tenth indication information; (22) determining the first time-frequency resource based on the first MCS and the size of the first data that is indicated by the ninth indication information; (23) determining the second time-frequency resource based on the first time-frequency resource and the time-frequency resource that is indicated by the ninth indication information; and (24) determining the second MCS based on the second time-frequency resource and the size of the second data that is indicated by the ninth indication information. For specific implementation of steps in the implementation process of step 1403, reference may be made to the foregoing descriptions. Details are not described again.

Refer to FIG. 14. The method further includes step 1404 or step 1405.

1404: The terminal sends the first data to the network device on the first time-frequency resource based on the first MCS, and sends the second data to the network device on the second time-frequency resource based on the second MCS. Correspondingly, the network device receives the first data from the terminal on the first time-frequency resource based on the first MCS, and receives the second data from the terminal on the second time-frequency resource based on the second MCS. For related descriptions of step 1404, reference may be made to the foregoing step 703.

1405: The network device sends the first data to the terminal on the first time-frequency resource based on the first MCS, and sends the second data to the terminal on the second time-frequency resource based on the second MCS. Correspondingly, the terminal receives the first data from the network device on the first time-frequency resource based on the first MCS, and receives the second data from the network device on the second time-frequency resource based on the second MCS. For related descriptions of step 1405, reference may be made to the foregoing step 704.

In the method provided in Embodiment 3, if there are two pieces of data, the terminal may determine time-frequency resources and MCSs of the two pieces of data, to meet reliability requirements of different pieces of data and flexibly perform data transmission. Compared with performing joint modulation and coding on the two pieces of data based on a reliability requirement of one piece of the data (for example, a same MCS is used for the two pieces of data), respective MCSs are used for the two pieces of data, which avoids a resource waste when meeting reliability of the two pieces of data. In addition, in the current technology, when two or more pieces of service data are transmitted in one physical channel, MCSs cannot be flexibly indicated and time-frequency resources cannot be flexibly allocated. However, in this application, an appropriate MCS may be selected according to a service requirement. On one hand, robustness of data with a high reliability requirement can be ensured, and on the other hand, spectral efficiency of data with a low reliability requirement can be ensured.

**Embodiment 4**

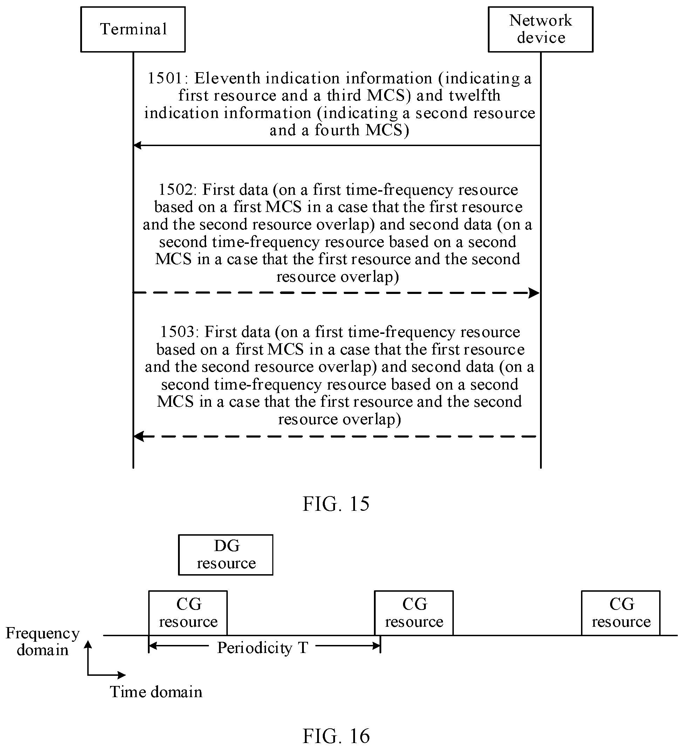

FIG. 15 shows a communication method according to Embodiment 4 of this application.

1501: A network device sends eleventh indication information and twelfth indication information to a terminal, where the eleventh indication information indicates a first resource and a third MCS, the twelfth indication information indicates a second resource and a fourth MCS, the third MCS is an MCS for sending or receiving first data on the first resource, and the fourth MCS is an MCS for sending or receiving second data on the second resource. Correspondingly, the terminal receives the eleventh indication information and the twelfth indication information from the network device.

Both the first resource and the second resource may be CG resources, or may be DG resources, or one of the first resource and the second resource may be a CG resource and the other may be a DG resource.

A size of the first data may be determined based on the first resource and the third MCS that are indicated by the eleventh indication information, and a size of the second data may be determined based on the second resource and the fourth MCS that are indicated by the twelfth indication information. Optionally, the first data and the second data are transmitted in a same physical channel. For related descriptions of the optional method, reference may be made to the foregoing descriptions.

Step 1502 or step 1503 is performed after step 1501.

1502: If the first resource and the second resource overlap, the terminal sends the first data to the network device on a first time-frequency resource based on a first MCS, and sends the second data to the network device on a second time-frequency resource based on a second MCS. Correspondingly, the network device receives the first data from the terminal on the first time-frequency resource based on the first MCS, and receives the second data from the terminal on the second time-frequency resource based on the second MCS.

1503: If the first resource and the second resource overlap, the network device sends the first data to the terminal on a first time-frequency resource based on a first MCS, and sends the second data to the terminal on a second time-frequency resource based on a second MCS. Correspondingly, the terminal receives the first data from the network device on the first time-frequency resource based on the first MCS, and receives the second data from the network device on the second time-frequency resource based on the second MCS.

The first MCS is an MCS for sending or receiving the first data on the first time-frequency resource, and the second MCS is an MCS for sending or receiving the second data on the second time-frequency resource. The first resource includes the first time-frequency resource and the second time-frequency resource, or the second resource includes the first time-frequency resource and the second time-frequency resource.

Optionally, before step 1502 and step 1503, the terminal may determine to reuse the first data and the second data in one physical channel for transmission. Specifically, the first data and the second data may be reused on a resource with a high priority or a resource including a larger quantity of REs in the first resource and the second resource. If one of the first resource and the second resource is a CG resource and the other is a DG resource, the first data and the second data may also be reused on the DG resource or the CG resource in the first resource and the second resource.

Optionally, before step 1502 and step 1503, the terminal may determine the first time-frequency resource, the second time-frequency resource, the first MCS, and the second MCS in the following Manner A or Manner B.

Manner A

The terminal receives tenth indication information from the network device, where the tenth indication information indicates the first time-frequency resource or the first MCS; if the tenth indication information indicates the first time-frequency resource, the terminal determines the first time-frequency resource based on the tenth indication information, and determines the first MCS, the second time-frequency resource, and the second MCS based on the first time-frequency resource, the eleventh indication information, and the twelfth indication information; and if the tenth indication information indicates the first MCS, the terminal determines the first MCS based on the tenth indication information, and determines the first time-frequency resource, the second time-frequency resource, and the second MCS based on the first MCS, the eleventh indication information, and the twelfth indication information.

If the tenth indication information is for determining the first time-frequency resource, Manner A during specific implementation may include that:
(31) the terminal determines the first time-frequency resource based on the tenth indication information; (32) the terminal determines the first MCS based on the first time-frequency resource and the size of the first data; or the terminal determines the first MCS based on the third MCS or the fourth MCS, where the size of the first data is determined based on the eleventh indication information; (33) the terminal determines the second time-frequency resource based on the first time-frequency resource and the first resource or the second resource (where a specific resource depends on a resource on which the terminal determines to reuse the first data and the second data); and (34) the terminal determines the second MCS based on the second time-frequency resource and the size of the second data, where the size of the second data is determined based on the twelfth indication information.

A process in which the terminal determines the first MCS based on the third MCS or the fourth MCS may include: using a modulation manner in the third MCS as a modulation manner in the first MCS, determining spectral efficiency based on the first time-frequency resource and the size of the first data, dividing the modulation order in the third MCS by the spectral efficiency to obtain a code rate in the first MCS, and determining the first MCS after determining the modulation manner in the first MCS and the code rate in the first MCS; or using a modulation manner in the fourth MCS as the modulation manner in the first MCS, determining the spectral efficiency based on the first time-frequency resource and the size of the first data, dividing the modulation order in the fourth MCS by the spectral efficiency to obtain the code rate in the first MCS, and determining the first MCS after determining the modulation manner in the first MCS and the code rate in the first MCS.

If the tenth indication information is for determining the first MCS, Manner A during specific implementation may include that:

(41) the terminal determines the first MCS based on the tenth indication information; (42) the terminal determines the first time-frequency resource based on the first MCS and the size of the first data, where the size of the first data is determined based on the eleventh indication information; (43) the terminal determines the second time-frequency resource based on the first time-frequency resource and the first resource or the second resource (where a specific resource depends on a resource on which the terminal determines to reuse the first data and the second data); and (44) the terminal determines the second MCS based on the second time-frequency resource and the size of the second data, where the size of the second data is determined based on the twelfth indication information.

Step (41) may be implemented in the following Manner a1 or Manner a2.

Manner a1: The first MCS is determined based on the third MCS. The third MCS includes a modulation manner and a code rate $R_{third\ MCS}$. In addition, the tenth indication information may indicate beta. In this case, the modulation manner in the first MCS is the same as the modulation manner in the third MCS, and a code rate in the first MCS is determined based on $R_{third\ MCS}$ and beta. For example, the code rate in the first MCS=beta*$R_{third\ MCS}$, or the code rate in the first MCS=$R_{third\ MCS}$/beta.

Manner a2: The first MCS is determined based on the fourth MCS. The fourth MCS includes a modulation manner and a code rate $R_{fourth\ MCS}$. In addition, the tenth indication information may indicate beta. In this case, the modulation manner in the first MCS is the same as the modulation manner in the fourth MCS, and a code rate in the first MCS is determined based on $R_{fourth\ MCS}$ and beta. For example, the code rate in the first MCS=beta*$R_{fourth\ MCS}$, or the code rate in the first MCS=$R_{fourth\ MCS}$/beta.

In Manner A, optionally, the method further includes that: the network device sends the tenth indication information to the terminal.

Manner B

In one case, the first resource includes the first time-frequency resource and the second time-frequency resource (that is, the terminal determines to reuse the first data and the second data on the first resource), the terminal determines the second time-frequency resource based on the second resource, the terminal determines the first time-frequency resource based on the first resource and the second time-frequency resource, the second MCS is the fourth MCS, and the first MCS is the third MCS (in this case, a size of the actually transmitted first data is determined based on the first MCS and the first time-frequency resource) or the first MCS is determined based on the first time-frequency resource and the size of the first data. In this case, the first resource is greater than the second resource. Optionally, the terminal determines X1 REs in the first resource as the second time-frequency resource, where X1 is a quantity of REs for data transmission in the second resource.

In another case, the second resource includes the first time-frequency resource and the second time-frequency resource (that is, the terminal determines to reuse the first data and the second data on the second resource), the terminal determines the first time-frequency resource based on the first resource, the terminal determines the second time-frequency resource based on the second resource and the first time-frequency resource, the first MCS is the third MCS, and the second MCS is the fourth MCS (in this case, a size of the actually transmitted second data is determined based on the second MCS and the second time-frequency resource) or the second MCS is determined based on the second time-frequency resource and the size of the second data. In this case, the second resource is greater than the first resource. Optionally, the terminal determines X2 REs in the second resource as the first time-frequency resource, where X2 is a quantity of REs for data transmission in the first resource.

For example, in a case of performing uplink data scheduling, after allocating a CG resource to the terminal, the network device may further allocate a DG resource to the terminal. In some cases, the DG resource and the CG resource overlap (overlap), for example, a case shown in FIG. 16. There are two meanings of overlapping: overlapping in time domain, and overlapping in frequency domain. Optionally, time-domain overlapping means that at least one symbol in time-domain information corresponding to two time-frequency resources is the same. If overlapping exists in the time domain, in the current technology, transmission is not allowed to be performed on both a CG resource and a DG resource, and one resource is selected according to a specific rule for data transmission, that is, only one piece of data can be sent. In this scenario, the method provided in Embodiment 4 may be used, and two pieces of data may be reused in one physical channel for transmission. After the physical channel is reused, the two pieces of data may be simultaneously transmitted on one of the following resources: (1) the DG resource; (2) the CG resource. (3) a resource with a high priority; or (4) a resource including a larger quantity of REs. A priority of a resource may be indicated by using DCI. When a resource with a high priority is preferentially used, if two resources have a same priority, transmission may be performed on the resource corresponding to (1) or (2) or (4).

For data sent on the CG resource (assumed as the first resource), the network device indicates an MCS (that is, the third MCS). In this case, a size of the data (that is, the first data) sent on the CG resource may be determined based on the CG resource and the third MCS. For data sent on the DG resource (assumed as the second resource), the network device also indicates an MCS (that is, the fourth MCS). In this case, a size of the data (that is, the second data) sent on the DG resource may be determined based on the DG resource and the fourth MCS.

After the physical channel is reused, because resources are limited and the two pieces of data cannot be transmitted by using the MCSs indicated by the network device, the MCSs and time-frequency resources of the two pieces of data need to be re-determined. In this case, the method provided in Embodiment 4 of this application may be used to determine the time-frequency resources (that is, the first time-frequency resource and the second time-frequency resource) and the MCSs (that is, the first MCS and the second MCS) of the two pieces of data.

For beneficial effects of Embodiment 4, reference may be made to Embodiment 3. Details are not described again.

In the foregoing Embodiment 3 and Embodiment 4, the tenth indication information may alternatively not be for determining the first time-frequency resource or the first MCS, but is for determining the second time-frequency resource or the second MCS. In this case, an implementation process is similar to the implementation processes described in the foregoing Embodiment 3 and Embodiment 4, and it is only required that the first time-frequency resource and the second time-frequency resource in related descriptions of the tenth indication information are replaced with each other, and the first data and the second data are replaced with each other. Details are not described again. In the foregoing Embodiment 3 and Embodiment 4, for implementation processes of steps that are not described in detail, reference may be made to descriptions of corresponding steps in Embodiment 1 and Embodiment 2. Details are not described again.

It should be noted that, in the foregoing embodiments of this application, two pieces of data are used as an example to describe the foregoing method for determining an MCS and a time-frequency resource. During actual implementation, there may be more pieces of data, and a determining method is similar. Details are not described again.

It should be noted that, in the current technology, newly transmitted data and retransmitted data for different data are not allowed to be transmitted in a same physical channel. Even if data transmission is performed through a plurality of layers, it is not allowed that one is newly transmitted data and another is retransmitted data. However, in this application, newly transmitted data and retransmitted data may be transmitted in a same physical channel, and the foregoing method may be used to determine time-frequency resources and MCSs of the newly transmitted data and the retransmitted data. Compared with the current technology, latency can be effectively reduced. In the current technology, in each scheduling, only retransmitted data or initially transmitted data is allowed to be scheduled. If the retransmitted data is scheduled, the initially transmitted data can be scheduled only in next time, causing latency of the initially transmitted data. Similarly, if the initially transmitted data is scheduled, reliability is reduced. However, reliability and latency are two very important indicators for a URLLC system. By using this solution, a gain can be brought to URLLC.

The foregoing mainly describes the solutions in embodiments of this application from the perspective of interaction between network elements. It may be understood that, to implement the foregoing functions, each network element includes at least one of a corresponding hardware structure or software module for performing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the network elements may be divided into functional units based on the foregoing method examples. For example, each functional unit may be obtained through division based on a corresponding function, or two or more functions may be integrated into one processing unit. The integrated unit may be implemented in a form of hardware, or may be implemented in a form of a software functional unit. It should be noted that, in this embodiment of this application, division into the units is an example, and is merely a logical function division. During actual implementation, another division manner may be used.

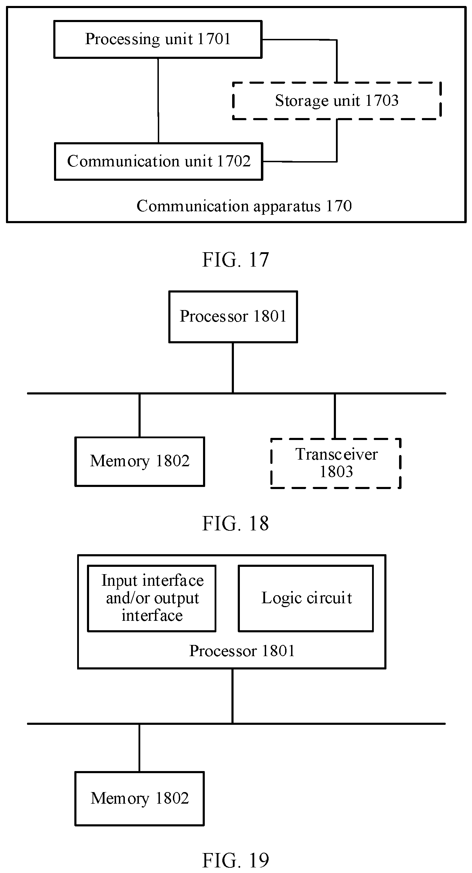

For example, FIG. 17 is a possible schematic diagram of a structure of a communication apparatus (denoted as a communication apparatus 170) in the foregoing embodiments. The communication apparatus 170 includes a processing unit 1701 and a communication unit 1702. Optionally, the communication apparatus further includes a storage unit 1703. The communication apparatus 170 may be configured to show structures of the network device and the terminal in the foregoing embodiments.

When FIG. 17 is used to show the structure of the terminal in the foregoing embodiments, the processing unit 1701 is configured to control and manage an action of the terminal. For example, the processing unit 1701 is configured to perform 701 to 704 in FIG. 7, 1101 to 1104 in FIG. 11, 1401 to 1405 in FIG. 14, 1501 to 1503 in FIG. 15, and/or an action performed by the terminal in another process described in embodiments of this application. The processing unit 1701 may communicate with another network entity through the communication unit 1702, for example, communicate with the network device in FIG. 7. The storage unit 1703 is configured to store program code and data that are of the terminal.

When FIG. 17 is used to show the structure of the network device in the foregoing embodiments, the processing unit 1701 is configured to control and manage an action of the network device. For example, the processing unit 1701 is configured to perform 701, 703, and 704 in FIG. 7, 1101, 1103, and 1104 in FIG. 11, 1401, 1402, 1404, and 1405 in FIG. 14, 1501 to 1503 in FIG. 15, and/or an action performed by the network device in another process described in embodiments of this application. The processing unit 1701 may communicate with another network entity through the communication unit 1702, for example, communicate with the terminal in FIG. 7. The storage unit 1703 is configured to store program code and data that are of the network device.

For example, the communication apparatus 170 may be a device, or may be a chip or a chip system.

When the communication apparatus 170 is a device, the processing unit 1701 may be a processor; and the communication unit 1702 may be a communication interface, a transceiver, or an input interface and/or an output interface. Optionally, the transceiver may be a transceiver circuit. Optionally, the input interface may be an input circuit, and the output interface may be an output circuit.

When the communication apparatus 170 is a chip or a chip system, the communication unit 1702 may be a communication interface, an input interface and/or an output interface, an interface circuit, an output circuit, an input circuit, a pin, a related circuit, or the like on the chip or the chip system. The processing unit 1701 may be a processor, a processing circuit, a logic circuit, or the like.

When an integrated unit in FIG. 17 is implemented in a form of a software functional module and sold or used as an independent product, the integrated unit may be stored in a computer-readable storage medium. Based on such an understanding, the technical solutions of embodiments of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) or a processor to perform all or some of the steps of the methods described in embodiments of this application. The storage medium for storing the computer software product includes: any medium that can store program code, such as a USB flash drive, a removable hard disk, a read-only memory, a random access memory, a magnetic disk, or an optical disc.

An embodiment of this application further provides a schematic diagram of a hardware structure of a communication apparatus. Refer to FIG. 18 or FIG. 19, the communication apparatus includes a processor 1801, and optionally, further includes a memory 1802 connected to the processor 1801.

The processor 1801 may be a general-purpose central processing unit (central processing unit, CPU), a microprocessor, an application-specific integrated circuit (application-specific integrated circuit, ASIC), or one or more integrated circuits configured to control program execution of the solutions of this application. The processor 1801 may alternatively include a plurality of CPUs, and the processor 1801 may be a single-core (single-CPU) processor or a multi-core (multi-CPU) processor. The processor herein may be one or more devices, circuits, or processing cores configured to process data (for example, computer program instructions).

The memory 1802 may be a ROM or another type of static storage device that can store static information and instructions, or a RAM or another type of dynamic storage device that can store information and instructions; or may be an electrically erasable programmable read-only memory, a compact disc read-only memory, or another optical disc storage, optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. This is not limited in this embodiment of this application. The memory 1802 may independently exist (where in this case, the memory may be located outside the communication apparatus, or may be located inside the communication apparatus), or may be integrated with the processor 1801. The memory 1802 may include computer program code. The processor 1801 is configured to execute the computer program code stored in the memory 1802, to implement the method provided in embodiments of this application.

In a first possible implementation, refer to FIG. 18. The communication apparatus further includes a transceiver 1803. The processor 1801, the memory 1802, and the transceiver 1803 are connected through a bus. The transceiver 1803 is configured to communicate with another device or a communication network. Optionally, the transceiver 1803 may include a transmitter and a receiver. A component configured to implement a receiving function in the transceiver 1803 may be considered as a receiver. The receiver is configured to perform a receiving step in embodiments of this application. A component configured to implement a sending function in the transceiver 1803 may be considered as a transmitter. The transmitter is configured to perform a sending step in embodiments of this application.

Based on the first possible implementation, FIG. 18 may be used to show structures of the network device and the terminal in the foregoing embodiments. The processor 1801 may be configured to implement a function of the processing unit 1701 in FIG. 17, the memory 1802 is configured to implement a function of the storage unit 1703 in FIG. 17, and the transceiver 1803 is configured to implement a function of the communication unit 1702 in FIG. 17.

In a second possible implementation, the processor 1801 includes a logic circuit and an input interface and/or an output interface. For example, the output interface is configured to perform a sending action in a corresponding method, and the input interface is configured to perform a receiving action in the corresponding method.

Based on the second possible implementation, refer to FIG. 19. A schematic diagram of a structure shown in FIG. 19 may be used to show structures of the network device and the terminal in the foregoing embodiments.

When FIG. 19 is used to show the structure of the terminal in the foregoing embodiments, the processor 1801 is configured to control and manage an action of the terminal. For example, the logic circuit in the processor 1801 is configured to perform 701 to 704 in FIG. 7, 1101 to 1104 in FIG. 11, 1401 to 1405 in FIG. 14, 1501 to 1503 in FIG. 15, and/or an action performed by the terminal in another process described in embodiments of this application. The logic circuit in the processor 1801 may communicate with another network entity through the input interface and/or the output interface, for example, communicate with the network device in FIG. 7. The memory 1802 is configured to store program code and data that are of the terminal.

When FIG. 19 is used to show the structure of the network device in the foregoing embodiments, the processor 1801 is configured to control and manage an action of the network device. For example, the logic circuit in the processor 1801 is configured to perform 701, 703, and 704 in FIG. 7, 1101, 1103, and 1104 in FIG. 11, 1401, 1402, 1404, and 1405 in FIG. 14, 1501 to 1503 in FIG. 15, and/or an action performed by the network device in another process described in embodiments of this application. The logic circuit in the processor 1801 may communicate with another network entity through the input interface and/or the output interface, for example, communicate with the terminal in FIG. 7. The memory 1802 is configured to store program code and data that are of the network device.

In an implementation process, the steps in the method provided in this embodiment may be completed by using a hardware integrated logic circuit in the processor, or by using instructions in a form of software. The steps of the method disclosed with reference to embodiments of this application may be directly performed by a hardware processor, or may be performed by using a combination of hardware in the processor and a software module.

An embodiment of this application further provides a computer-readable storage medium, including instructions. When the instructions run on a communication apparatus, the communication apparatus is enabled to perform any one of the foregoing methods.

An embodiment of this application further provides a computer program product including instructions. When the instructions run on a communication apparatus, the communication apparatus is enabled to perform any one of the foregoing methods.

An embodiment of this application further provides a communication system, including a network device and a terminal.

An embodiment of this application further provides a chip, including a processor and a communication interface. The processor is coupled to a memory through the communication interface. When the processor executes a computer program or instructions in the memory, any method provided in the foregoing embodiments is performed.

All or some of the foregoing embodiments may be implemented by using software, hardware, firmware, or any combination thereof. When a software program is used to implement embodiments, embodiments may be implemented entirely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instruction may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk), or the like.

Although this application is described with reference to embodiments, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

In descriptions of this application, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In the descriptions of this application, unless otherwise specified, "at least one" means one or more, and "a plurality of" means two or more.

In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be noted that, in this application, terms such as "example" or "for example" are used for representing giving an example, an illustration, or a description. Any embodiment or design scheme described as an "example" or "for example" in this application should not be explained as being more preferred or having more advantages than another embodiment or design scheme. Exactly, use of the term such as "example" or "for example" is intended to present a related concept in a specific manner.

**Claims**

1. A communication method performed by a terminal, comprising:

   receiving (701) at least first indication information from a network device, wherein the first indication information indicates a time-frequency resource and a modulation and coding scheme MCS of first data, the time-frequency resource comprises a first time-frequency resource and a second time-frequency resource, the first time-frequency resource is a time-frequency resource carrying the first data, and the second time-frequency resource is a time-frequency resource carrying second data;

   determining (702) the first time-frequency resource, the second time-frequency resource, and an MCS of the second data, wherein at least one of the first time-frequency resource, the second time-frequency resource, or the MCS of the second data is determined based on the at least first indication information; and

   sending (703) the first data to the network device on the first time-frequency resource based on the MCS of the first data, and sending the second data to the network device on the second time-frequency resource based on the MCS of the second data; or receiving the first data from the network device on the first time-frequency resource based on the MCS of the first data, and receiving the second data from the network device on the second time-frequency resource based on the MCS of the second data, wherein the first data and the second data are transmitted in a same physical channel.

2. The method according to claim 1, wherein the determining the first time-frequency resource comprises:

   determining a size of the first data, and determining the first time-frequency resource based on the size of the first data and the MCS of the first data; or

   determining the first time-frequency resource based on the time-frequency resource and a relationship between the first time-frequency resource and the time-frequency resource; or

   receiving second indication information, and determining the first time-frequency resource based on the second indication information; or

   determining the first time-frequency resource based on the time-frequency resource and the second time-frequency resource.

3. The method according to claim 1 or 2, wherein the method further comprises:

   receiving fifth indication information from the network device; and

   determining the size of the first data based on the fifth indication information.

4. The method according to any one of claims 1 to 3, wherein the determining the second time-frequency resource comprises:

determining the second time-frequency resource based on the time-frequency resource and a relationship between the second time-frequency resource and the time-frequency resource; or

receiving third indication information, and determining the second time-frequency resource based on the third indication information; or

determining the second time-frequency resource based on the time-frequency resource and the first time-frequency resource; or

determining a size of the second data, and determining the second time-frequency resource based on the MCS of the second data and the size of the second data.

5. The method according to any one of claims 1 to 4, wherein the method further comprises:

receiving sixth indication information from the network device; and

determining the size of the second data based on the sixth indication information.

6. The method according to any one of claims 1 to 5, wherein the determining an MCS of the second data comprises:

determining the MCS of the second data based on the MCS of the first data and a relationship between the MCS of the first data and the MCS of the second data; or

receiving fourth indication information, and determining the MCS of the second data based on the fourth indication information; or

determining the size of the second data, and determining the MCS of the second data based on the size of the second data and the second time-frequency resource.

7. A communication method performed by a network device, comprising:

sending first indication information to a terminal, wherein the first indication information indicates a time-frequency resource and a modulation and coding scheme MCS of first data, the time-frequency resource comprises a first time-frequency resource and a second time-frequency resource, the first time-frequency resource is a time-frequency resource carrying the first data, and the second time-frequency resource is a time-frequency resource carrying second data; and

sending the first data to the terminal on the first time-frequency resource based on the MCS of the first data, and sending the second data to the terminal on the second time-frequency resource based on an MCS of the second data; or receiving the first data from the terminal on the first time-frequency resource based on the MCS of the first data, and receiving the second data from the terminal on the second time-frequency resource based on the MCS of the second data, wherein the first data and the second data are transmitted in a same physical channel.

8. The method according to claim 7, wherein the method further comprises:
sending second indication information to the terminal, wherein the second indication information indicates the first time-frequency resource.

9. The method according to claim 7 or 8, wherein the method further comprises:
sending third indication information to the terminal, wherein the third indication information indicates the second time-frequency resource.

10. The method according to any one of claims 7 to 9, wherein the method further comprises:
sending fourth indication information to the terminal, wherein the fourth indication information indicates the MCS of the second data.

11. The method according to any one of claims 7 to 10, wherein the method further comprises:
sending fifth indication information to the terminal, wherein the fifth indication information indicates a size of the first data.

12. The method according to any one of claims 7 to 11, wherein the method further comprises:
sending sixth indication information to the terminal, wherein the sixth indication information indicates a size of the second data.

13. A communication apparatus (170), configured to perform the method according to any one of claims 1 to 12.

14. A computer program product comprising instructions which, when executed by a processor of a terminal, cause the processor to carry out the method of any of the claims 1 to 6, or, when executed by a processor of a network device, to carry out the method of any one of claims 7 to 12.

15. A chip, wherein the chip is connected to a memory or the chip comprises the memory, and is configured to read and execute instructions stored in the memory, when the instructions are executed by a processor of a terminal, cause the processor to carry out the method of any of the claims 1 to 6, or, when executed by a processor of a network device, to carry out the method according to any one of claims 7 to 12.

**Patentansprüche**

1. Kommunikationsverfahren, das durch ein Endgerät durchgeführt wird, umfassend:

Empfangen (701) von mindestens ersten Anzeigeinformationen von einer Netzwerkvorrichtung, wobei die ersten Anzeigeinformationen eine Zeit-Frequenz-Ressource und ein Modulations- und Kodierungsschema MCS von ersten Daten anzeigen, die Zeit-Frequenz-Ressource eine erste Zeit-Frequenz-Ressource und eine zweite Zeit-Frequenz-Ressource umfasst, die erste Zeit-Frequenz-Ressource eine Zeit-Frequenz-Ressource ist, welche die ersten Daten überträgt, und die zweite Zeit-Frequenz-Ressource eine Zeit-Frequenz-Ressource ist, welche zweite Daten überträgt;
Bestimmen (702) der ersten Zeit-Frequenz-Ressource, der zweiten Zeit-Frequenz-Ressource und eines MCS der zweiten Daten, wobei mindestens eine der ersten Zeit-Frequenz-Ressource, der zweiten Zeit-Frequenz-Ressource oder des MCS der zweiten Daten basierend auf den mindestens ersten Anzeigeinformationen bestimmt wird; und
Senden (703) der ersten Daten an die Netzwerkvorrichtung auf der ersten Zeit-Frequenz-Ressource basierend auf dem MCS der ersten Daten, und Senden der zweiten Daten an die Netzwerkvorrichtung auf der zweiten Zeit-Frequenz-Ressource basierend auf dem MCS der zweiten Daten; oder Empfangen der ersten Daten von der Netzwerkvorrichtung auf der ersten Zeit-Frequenz-Ressource basierend auf dem MCS der ersten Daten, und Empfangen der zweiten Daten von der Netzwerkvorrichtung auf der zweiten Zeit-Frequenz-Ressource basierend auf dem MCS der zweiten Daten, wobei die ersten Daten und die zweiten Daten in einem gleichen physikalischen Kanal übertragen werden.

2. Verfahren nach Anspruch 1, wobei das Bestimmen der ersten Zeit-Frequenz-Ressource Folgendes umfasst:

Bestimmen einer Größe der ersten Daten und Bestimmen der ersten Zeit-Frequenz-Ressource basierend auf der Größe der ersten Daten und dem MCS der ersten Daten; oder
Bestimmen der ersten Zeit-Frequenz-Ressource basierend auf der Zeit-Frequenz-Ressource und einer Beziehung zwischen der ersten Zeit-Frequenz-Ressource und der Zeit-Frequenz-Ressource; oder
Empfangen zweiter Anzeigeinformationen und Bestimmen der ersten Zeit-Frequenz-Ressource basierend auf den zweiten Anzeigeinformationen; oder
Bestimmen der ersten Zeit-Frequenz-Ressource basierend auf der Zeit-Frequenz-Ressource und der zweiten Zeit-Frequenz-Ressource.

3. Verfahren nach Anspruch 1 oder 2, wobei das Verfahren ferner Folgendes umfasst:

Empfangen fünfter Anzeigeinformationen von der Netzwerkvorrichtung; und
Bestimmen der Größe der ersten Daten basierend auf den fünften Anzeigeinformationen.

4. Verfahren nach einem der Ansprüche 1 bis 3, wobei das Bestimmen der zweiten Zeit-Frequenz-Ressource Folgendes umfasst:

Bestimmen der zweiten Zeit-Frequenz-Ressource basierend auf der Zeit-Frequenz-Ressource und einer Beziehung zwischen der zweiten Zeit-Frequenz-Ressource und der Zeit-Frequenz-Ressource; oder
Empfangen dritter Anzeigeinformationen und Bestimmen der zweiten Zeit-Frequenz-Ressource basierend auf den dritten Anzeigeinformationen; oder
Bestimmen der zweiten Zeit-Frequenz-Ressource basierend auf der Zeit-Frequenz-Ressource und der ersten Zeit-Frequenz-Ressource; oder
Bestimmen einer Größe der zweiten Daten und Bestimmen der zweiten Zeit-Frequenz-Ressource basierend auf dem MCS der zweiten Daten und der Größe der zweiten Daten.

5. Verfahren nach einem der Ansprüche 1 bis 4, wobei das Verfahren ferner Folgendes umfasst:

   Empfangen sechster Anzeigeinformationen von der Netzwerkvorrichtung; und
   Bestimmen der Größe der zweiten Daten basierend auf den sechsten Anzeigeinformationen.

6. Verfahren nach einem der Ansprüche 1 bis 5, wobei das Bestimmen eines MCS der zweiten Daten Folgendes umfasst:

   Bestimmen des MCS der zweiten Daten basierend auf dem MCS der ersten Daten und einer Beziehung zwischen dem MCS der ersten Daten und dem MCS der zweiten Daten; oder
   Empfangen vierter Anzeigeinformationen und Bestimmen des MCS der zweiten Daten basierend auf den vierten Anzeigeinformationen; oder
   Bestimmen der Größe der zweiten Daten und Bestimmen des MCS der zweiten Daten basierend auf der Größe der zweiten Daten und der zweiten Zeit-Frequenz-Ressource.

7. Kommunikationsverfahren, das durch eine Netzwerkvorrichtung durchgeführt wird, umfassend:

   Senden erster Anzeigeinformationen an ein Endgerät, wobei die ersten Anzeigeinformationen eine Zeit-Frequenz-Ressource und ein Modulations- und Kodierungsschema MCS von ersten Daten anzeigen, die Zeit-Frequenz-Ressource eine erste Zeit-Frequenz-Ressource und eine zweite Zeit-Frequenz-Ressource umfasst, die erste Zeit-Frequenz-Ressource eine Zeit-Frequenz-Ressource ist, welche die ersten Daten überträgt, und die zweite Zeit-Frequenz-Ressource eine Zeit-Frequenz-Ressource ist, welche zweite Daten überträgt; und
   Senden der ersten Daten an das Endgerät auf der ersten Zeit-Frequenz-Ressource basierend auf dem MCS der ersten Daten, und Senden der zweiten Daten an das Endgerät auf der zweiten Zeit-Frequenz-Ressource basierend auf einem MCS der zweiten Daten;
   oder Empfangen der ersten Daten von dem Endgerät auf der ersten Zeit-Frequenz-Ressource basierend auf dem MCS der ersten Daten, und Empfangen der zweiten Daten von dem Endgerät auf der zweiten Zeit-Frequenz-Ressource basierend auf dem MCS der zweiten Daten, wobei die ersten Daten und die zweiten Daten in einem gleichen physikalischen Kanal übertragen werden.

8. Verfahren nach Anspruch 7, wobei das Verfahren ferner Folgendes umfasst:
   Senden zweiter Anzeigeinformationen an das Endgerät, wobei die zweiten Anzeigeinformationen die erste Zeit-Frequenz-Ressource anzeigen.

9. Verfahren nach Anspruch 7 oder 8, wobei das Verfahren ferner Folgendes umfasst:
   Senden dritter Anzeigeinformationen an das Endgerät, wobei die dritten Anzeigeinformationen die zweite Zeit-Frequenz-Ressource anzeigen.

10. Verfahren nach einem der Ansprüche 7 bis 9, wobei das Verfahren ferner Folgendes umfasst:
    Senden vierter Anzeigeinformationen an das Endgerät, wobei die vierten Anzeigeinformationen das MCS der zweiten Daten anzeigen.

11. Verfahren nach einem der Ansprüche 7 bis 10, wobei das Verfahren ferner Folgendes umfasst:
    Senden fünfter Anzeigeinformationen an das Endgerät, wobei die fünften Anzeigeinformationen eine Größe der ersten Daten anzeigen.

12. Verfahren nach einem der Ansprüche 7 bis 11, wobei das Verfahren ferner Folgendes umfasst:
    Senden sechster Anzeigeinformationen an das Endgerät, wobei die sechsten Anzeigeinformationen eine Größe der zweiten Daten anzeigen.

13. Kommunikationseinrichtung (170), die dazu konfiguriert ist, das Verfahren nach einem der Ansprüche 1 bis 12 durchzuführen.

14. Computerprogrammprodukt, umfassend Anweisungen, welche bei Ausführung durch einen Prozessor eines Endgeräts bewirken, dass der Prozessor das Verfahren nach einem der Ansprüche 1 bis 6 durchführt, und bei Ausführung durch einen Prozessor einer Netzvorrichtung bewirken, dass das Verfahren nach einem der Ansprüche 7 bis 12 durchgeführt wird.

15. Chip, wobei der Chip mit einem Speicher verbunden ist oder der Chip den Speicher umfasst und dazu konfiguriert ist, Anweisungen, die in dem Speicher gespeichert sind, zu lesen und auszuführen, bei Ausführung der Anweisungen durch einen Prozessor eines Endgeräts bewirkt wird, dass der Prozessor das Verfahren nach einem der Ansprüche 1 bis 6 durchführt, oder bei Ausführung durch einen Prozessor einer Netzwerkvorrichtung bewirkt wird, dass das Verfahren nach einem der Ansprüche 7 bis 12 durchgeführt wird.

**Revendications**

1. Procédé de communication réalisé par un terminal, comprenant :

la réception (701) d'au moins des premières informations d'indication à partir d'un dispositif de réseau, dans lequel les premières informations d'indication indiquent une ressource temps-fréquence et un schéma de modulation et de codage MCS de premières données, la ressource temps-fréquence comprend une première ressource temps-fréquence et une seconde ressource temps-fréquence, la première ressource temps-fréquence est une ressource temps-fréquence transportant les premières données, et la seconde ressource temps-fréquence est une ressource temps-fréquence transportant des secondes données ;
la détermination (702) de la première ressource temps-fréquence, de la seconde ressource temps-fréquence et d'un MCS des secondes données, dans lequel au moins l'un de la première ressource temps-fréquence, de la seconde ressource temps-fréquence ou du MCS des secondes données est déterminée sur la base de l'au moins les premières informations d'indication ; et
l'envoi (703) des premières données au dispositif de réseau sur la première ressource temps-fréquence sur la base du MCS des premières données, et l'envoi des secondes données au dispositif de réseau sur la seconde ressource temps-fréquence sur la base du MCS des secondes données ; ou la réception des premières données à partir du dispositif de réseau sur la première ressource temps-fréquence sur la base du MCS des premières données, et la réception des secondes données à partir du dispositif de réseau sur la seconde ressource temps-fréquence sur la base du MCS des secondes données, dans lequel les premières données et les secondes données sont transmises dans un même canal physique.

2. Procédé selon la revendication 1, dans lequel la détermination d'une première ressource temps-fréquence comprend :

la détermination d'une taille des premières données et la détermination de la première ressource temps-fréquence sur la base de la taille des premières données et du MCS des premières données ; ou
la détermination de la première ressource temps-fréquence sur la base de la ressource temps-fréquence et d'une relation entre la première ressource temps-fréquence et la ressource temps-fréquence ; ou
la réception des deuxièmes informations d'indication et la détermination de la première ressource temps-fréquence sur la base des deuxièmes informations d'indication ; ou
la détermination de la première ressource temps-fréquence sur la base de la ressource temps-fréquence et de la seconde ressource temps-fréquence.

3. Procédé selon la revendication 1 ou 2, dans lequel le procédé comprend également :

la réception des cinquièmes informations d'indication à partir du dispositif de réseau ; et
la détermination de la taille des premières données sur la base des cinquièmes informations d'indication.

4. Procédé selon l'une quelconque des revendications 1 à 3, dans lequel la détermination de la seconde ressource temps-fréquence comprend :

la détermination de la seconde ressource temps-fréquence sur la base de la ressource temps-fréquence et d'une relation entre la seconde ressource temps-fréquence et la ressource temps-fréquence ; ou
la réception des troisièmes informations d'indication et la détermination de la seconde ressource temps-fréquence sur la base des troisièmes informations d'indication ; ou
la détermination de la seconde ressource temps-fréquence sur la base de la ressource temps-fréquence et de la première ressource temps-fréquence ; ou
la détermination d'une taille des secondes données, et la détermination de la seconde ressource temps-fréquence sur la base du MCS des secondes données et de la taille des secondes données.

5. Procédé selon l'une quelconque des revendications 1 à 4, dans lequel le procédé comprend également :

la réception des sixièmes informations d'indication à partir du dispositif de réseau ; et
la détermination de la taille des secondes données sur la base des cinquièmes informations d'indication.

6. Procédé selon l'une quelconque des revendications 1 à 5, dans lequel la détermination d'un MCS des secondes données comprend :

la détermination du MCS des secondes données sur la base du MCS des premières données et d'une relation entre le MCS des premières données et le MCS des secondes données ; ou
la réception des quatrièmes informations d'indication et la détermination du MCS des secondes données sur la base des quatrièmes informations d'indication ; ou
la détermination d'une taille des secondes données, et la détermination du MCS des secondes données sur la base de la taille des secondes données et de la seconde ressource temps-fréquence.

7. Procédé de communication réalisé par un dispositif de réseau, comprenant :

l'envoi des premières informations d'indication à un terminal, dans lequel les premières informations d'indication indiquent une ressource temps-fréquence et un schéma de modulation et de codage MCS de premières données, la ressource temps-fréquence comprend une première ressource temps-fréquence et une seconde ressource temps-fréquence, la première ressource temps-fréquence est une ressource temps-fréquence transportant les premières données, et la seconde ressource temps-fréquence est une ressource temps-fréquence transportant des secondes données ; et
l'envoi des premières données au terminal sur la première ressource temps-fréquence sur la base du MCS des premières données, et l'envoi des secondes données au terminal sur la seconde ressource temps-fréquence sur la base du MCS des secondes données ; ou la réception des premières données à partir du terminal sur la première ressource temps-fréquence sur la base du MCS des premières données, et la réception des secondes données à partir du terminal sur la seconde ressource temps-fréquence sur la base du MCS des secondes données, dans lequel les premières données et les secondes données sont transmises dans un même canal physique.

8. Procédé selon la revendication 7, dans lequel le procédé comprend également :
l'envoi des deuxièmes informations d'indication au terminal, dans lequel les deuxièmes informations d'indication indiquent la première ressource temps-fréquence.

9. Procédé selon la revendication 7 ou 8, dans lequel le procédé comprend également :
l'envoi des troisièmes informations d'indication au terminal, dans lequel les troisièmes informations d'indication indiquent la seconde ressource temps-fréquence.

10. Procédé selon l'une quelconque des revendications 7 à 9, dans lequel le procédé comprend également :
l'envoi des quatrièmes informations d'indication au terminal, dans lequel les quatrièmes informations d'indication indiquent le MCS des secondes données.

11. Procédé selon l'une quelconque des revendications 7 à 10, dans lequel le procédé comprend également :
l'envoi des cinquièmes informations d'indication au terminal, dans lequel les cinquièmes informations d'indication indiquent une taille des premières données.

12. Procédé selon l'une quelconque des revendications 7 à 11, dans lequel le procédé comprend également :
l'envoi des sixièmes informations d'indication au terminal, dans lequel les sixièmes informations d'indication indiquent une taille des secondes données.

13. Appareil de communication (170), configuré pour réaliser le procédé selon l'une quelconque des revendications 1 à 12.

14. Produit de programme informatique comprenant des instructions qui, lorsqu'elles sont exécutées par un processeur d'un terminal, amènent le processeur à réaliser le procédé selon l'une quelconque des revendications 1 à 6, ou, lorsqu'elles sont exécutées par un processeur d'un dispositif de réseau, amènent le dispositif de réseau à réaliser le procédé selon l'une quelconque des revendications 7 à 12.

15. Puce, dans laquelle la puce est connectée à une mémoire ou la puce comprend la mémoire, et est configurée pour lire et exécuter des instructions stockées dans la mémoire, lorsque les instructions sont exécutées par un processeur d'un terminal, amènent le processeur à réaliser le procédé selon l'une quelconque des revendications 1 à 6, ou, lorsqu'elle est exécutée par un processeur d'un dispositif de réseau, la puce est amenée à réaliser le procédé selon l'une quelconque des revendications 7 à 12.

FIG. 1

(a)                                                                      (b)

FIG. 2

Slot

| n | n+1 | $\cdots$ | $\left\lfloor n \cdot \dfrac{2^{\mu_{PDSCH}}}{2^{\mu_{PDCCH}}} \right\rfloor + K_0$ |

| 0 | 1 | 2 | 3 | 4 | 5 | 6 | 7 | 8 | 9 | 10 | 11 | 12 | 13 |

Symbol

PDSCH

FIG. 3

| RB0 | RB1 | RB2 | RB3 | RB4 | RB5 | RB6 | RB7 | RB8 | RB9 |

RBG0    RBG1    RBG2    RBG3    RBG4

FIG. 4

| RB0 | RB1 | RB2 | RB3 | RB4 | RB5 | RB6 | RB7 | RB8 | RB9 |

FIG. 5

| Codeword | d(0) | d(1) | d(2) | d(3) | | h(0) | h(1) | h(2) | h(3) | h(4) | h(5) |
|---|---|---|---|---|---|---|---|---|---|---|---|

| 5 layers | d(0), d(2) | d(1), d(3) | h(0), h(3) | h(1), h(4) | h(2), h(5) |
|---|---|---|---|---|---|

## FIG. 6

| Terminal | | Network device |
|---|---|---|

701: First indication information (indicating a time-frequency resource and an MCS of first data, where the time-frequency resource includes a first time-frequency resource and a second time-frequency resource)

702: Determine the first time-frequency resource, the second time-frequency resource, and an MCS of second data

703: The first data (on the first time-frequency resource based on the MCS of the first data) and the second data (on the second time-frequency resource based on the MCS of the second data)

704: The first data (on the first time-frequency resource based on the MCS of the first data) and the second data (on the second time-frequency resource based on the MCS of the second data)

## FIG. 7

First time-frequency
resource

Second time-frequency
resource

Frequency
domain

Time-frequency resource

Time domain

(a)

First time-frequency
resource

Second time-frequency
resource

Frequency
domain

Time-frequency resource

Time domain

(b)

FIG. 8

FIG. 9

First time-frequency resource

Second time-frequency resource

Frequency
domain

Time domain

Time-frequency resource

(a)

First time-frequency resource

Second time-frequency resource

Frequency
domain

Time domain

Time-frequency resource

(b)

FIG. 10

```
┌──────────┐                                    ┌──────────┐
│ Terminal │                                    │ Network  │
│          │                                    │ device   │
└────┬─────┘                                    └────┬─────┘
     │                                               │
     │   1101: Eighth indication information (indicating a
     │      first time-frequency resource and an MCS of
     │                     first data)
     │◄──────────────────────────────────────────────┤
┌────┴─────────────────────┐                         │
│  1102: Determine a second│                         │
│ time-frequency resource and an MCS                 │
│        of second data    │                         │
└────┬─────────────────────┘                         │
     │   1103: The first data (on the first time-frequency
     │   resource based on the MCS of the first data) and the
     │   second data (on the second time-frequency resource
     │        based on the MCS of the second data)
     │- - - - - - - - - - - - - - - - - - - - - - - -►│
     │                                               │
     │   1104: The first data (on the first time-frequency
     │   resource based on the MCS of the first data) and the
     │   second data (on the second time-frequency resource
     │        based on the MCS of the second data)
     │◄- - - - - - - - - - - - - - - - - - - - - - - -│
     │                                               │
```

FIG. 11

First
time-domain
resource

Second
time-domain
resource

Time-frequency
resource

Frequency
domain

0   1   2   3   4   5   6   7   8   9   10  11  12  13  0   1   2   3   4   5

|← Interval →|

Time domain

(a)

First
time-domain
resource

Second
time-domain
resource

Time-frequency
resource

Frequency
domain

0   1   2   3   4   5   6   7   8   9   10  11  12  13  0   1   2   3   4   5

|← Interval →|

Time domain

(b)

FIG. 12

FIG. 13

```
┌─────────────┐                                          ┌─────────────┐
│             │                                          │  Network    │
│  Terminal   │                                          │  device     │
│             │                                          │             │
└──────┬──────┘                                          └──────┬──────┘
```

1401: Ninth indication information (indicating a time-frequency resource, a size of first data, and a size of second data, where the time-frequency resource includes a first time-frequency resource and a second time-frequency resource)

1402: Tenth indication information (for determining the first time-frequency resource or a first MCS)

1403: In a case that the tenth indication information indicates the first time-frequency resource, the terminal determines the first time-frequency resource based on the tenth indication information, and determines the first MCS, the second time-frequency resource, and a second MCS based on the first time-frequency resource and the ninth indication information; and in a case that the tenth indication information indicates the first MCS, the terminal determines the first MCS based on the tenth indication information, and determines the first time-frequency resource, the second time-frequency resource, and the second MCS based on the first MCS and the ninth indication information

1404: The first data (on the first time-frequency resource based on the first MCS) and the second data (on the second time-frequency resource based on the second MCS)

1405: The first data (on the first time-frequency resource based on the first MCS) and the second data (on the second time-frequency resource based on the second MCS)

FIG. 14

```
┌──────────┐                                                    ┌──────────┐
│ Terminal │                                                    │ Network  │
│          │                                                    │ device   │
└──────────┘                                                    └──────────┘
     │                                                               │
     │    1501: Eleventh indication information (indicating a         │
     │        first resource and a third MCS) and twelfth            │
     │◄─── indication information (indicating a second resource ─────│
     │              and a fourth MCS)                                │
     │                                                               │
     │     1502: First data (on a first time-frequency resource      │
     │     based on a first MCS in a case that the first resource    │
     │    and the second resource overlap) and second data (on a     │
     │      second time-frequency resource based on a second         │
     │        MCS in a case that the first resource and the second   │
     │─ ─ ─ ─ ─ ─ ─ ─ resource overlap) ─ ─ ─ ─ ─ ─ ─ ─ ─ ─ ─►│
     │                                                               │
     │     1503: First data (on a first time-frequency resource      │
     │     based on a first MCS in a case that the first resource    │
     │    and the second resource overlap) and second data (on a     │
     │      second time-frequency resource based on a second         │
     │        MCS in a case that the first resource and the second   │
     │◄─ ─ ─ ─ ─ ─ ─ ─ resource overlap) ─ ─ ─ ─ ─ ─ ─ ─ ─ ─│
     │                                                               │
```

FIG. 15

FIG. 16

Processing unit 1701

Storage unit 1703

Communication unit 1702

Communication apparatus 170

FIG. 17

Processor 1801

Memory 1802

Transceiver 1803

FIG. 18

Input interface and/or output interface

Logic circuit

Processor 1801

Memory 1802

FIG. 19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020187225 A1
- US 2020127788 A1
- WO 2019157897 A1